# FASCICULE DE BREVET EUROPEEN

(11) **EP 2 663 389 B1**
(45) Date de publication et mention de la délivrance du brevet: **04.03.2015**
(21) Numéro de dépôt: 12705325.4
(22) Date de dépôt: 12.01.2012
(51) Int. Cl.: B01D 29/00, B01D 63/06

(54) **NOUVELLE GEOMETRIE D'ELEMENTS DE FILTRATION**
NEUE FORM VON FILTERUNGSELEMENTEN
NOVEL SHAPE OF FILTERING ELEMENTS

(30) Priorité: 13.01.2011 FR 1150277
(43) Date de publication de la demande: 20.11.2013
(73) Titulaire: Technologies Avancées & Membranes Industrielles, 26110 Nyons (FR)
(72) Inventeur: LESCOCHE, Philippe, F-26110 Piegon (FR)
(74) Mandataire: Sarlin, Laure V.
(86) Numéro de dépôt international: PCT/FR2012/050078
(87) Numéro de publication internationale: WO 2012/095611

(56) Documents cités:
- EP-A1- 0 780 148
- WO-A1-01/62370
- DE-C1- 4 134 223
- FR-A1- 2 785 831

## Description

La présente invention concerne le domaine technique de la séparation tangentielle mettant en oeuvre des éléments de filtration adaptés pour assurer la séparation des molécules ou des particules contenues dans un milieu fluide à traiter. L'objet de l'invention vise, plus précisément, de nouveaux éléments de filtration comportant un support poreux rigide dans lequel des canaux de circulation pour le fluide à filtrer sont aménagés, ledit support présentant une géométrie originale.

L'objet de l'invention trouve une application particulièrement avantageuse dans le domaine de la filtration au sens large, et notamment la nanofiltration, l'ultrafiltration, la microfiltration, ou l'osmose inverse.

Dans l'état de la technique, il est connu de nombreux éléments de filtration réalisés à partir d'un support à caractère tubulaire ou plan. Il a notamment été proposé des éléments de filtration de type tubulaire comportant un support poreux, par exemple en matière inorganique, telle qu'en céramique, dans lequel est aménagé une série de canaux. Ce support peut être associé à une ou plusieurs couches séparatrices, par exemple en matière inorganique, déposées sur la surface de chaque canal de circulation et liées entre elles et au support, par frittage. Ces couches permettent d'ajuster le pouvoir de filtration de l'élément de filtration.

Dans le domaine des éléments de filtration tubulaires, le support poreux rigide est de forme allongée et présente une section transversale droite, le plus souvent polygonale ou circulaire. De nombreux supports comportant une pluralité de canaux parallèles entre eux et à l'axe longitudinal du support poreux, ont déjà été proposés notamment par la demanderesse. Par exemple, des éléments de filtration comportant une série de canaux non circulaires sont décrits dans la demande de brevet WO 93 07959 au nom de CERASIV, la demande de brevet EP 0780148 au nom de CORNING, la demande de brevet WO 00/29098 au nom d'ORELIS, les brevets EP 0778073 et EP 0778074 au nom de la demanderesse et les demandes de brevet WO 01/62370 au nom de la société des céramiques techniques et FR 2898513 au nom de ORELIS. En fonctionnement, les canaux communiquent, d'un côté, avec une chambre d'entrée pour le milieu fluide à traiter et, de l'autre côté, avec une chambre de sortie. La surface des canaux est, le plus souvent, recouverte d'au moins une couche séparatrice assurant la séparation des molécules ou des particules contenues dans le milieu fluide circulant à l'intérieur des canaux, selon un sens donné, d'une extrémité des canaux dite d'entrée à l'autre extrémité dite de sortie. Un tel élément de filtration réalise, par effet tamis, une séparation des espèces moléculaires ou particulaires du produit à traiter, dans la mesure où toutes les particules ou molécules supérieures au diamètre des pores de la zone de l'élément de filtration avec lequel elles sont en contact sont arrêtées. Durant la séparation, le transfert du fluide s'effectue à travers le support et éventuellement la ou les couches séparatrices lorsqu'elles sont présentes, et le fluide se répand dans la porosité du support pour se diriger vers la surface extérieure du support poreux. La partie du fluide à traiter ayant traversé la couche de séparation et le support poreux est appelée perméat ou filtrat et se trouve récupérée par une chambre de collecte entourant l'élément de filtration.

Le document EP0780148 décrit un élément de filtration avec des canaux, séparés par des couloirs de passage, formant des couronnes concentriques, les canaux des couronnes étant décalées.

En vue d'augmenter la surface des canaux permettant la filtration du fluide, il est souvent rechercher de disposer à l'intérieur d'un même support un nombre important de canaux. Du fait du nombre important de canaux, le nombre de dispositions possible des canaux les uns par rapport aux autres est important. Dans ce contexte, la demanderesse, soucieuse d'offrir de nouveaux éléments de filtration propose, dans le cadre de la présente invention, une nouvelle géométrie de support.

La présente invention concerne un élément de filtration pour la filtration d'un milieu fluide comportant un support poreux rigide de forme cylindrique présentant un axe central longitudinal et comprenant une pluralité de canaux pour la circulation du milieu fluide à filtrer en vue de récupérer un filtrat à la périphérie du support, ménagés dans le support parallèlement à son axe central, la surface totale des sections droites transversales de l'ensemble des canaux aménagés dans le support représentant au moins 42% de la surface totale de la section droite transversale du support et lesdits canaux définissant, notamment, des couronnes de filtration, au moins au nombre de trois, dans chacune desquelles :
- les canaux sont de section droite transversale non circulaire, la section droite transversale de chaque canal présentant un axe de symétrie qui passe par le centre du support,
- deux canaux voisins sont séparés par des couloirs de passage et de liaison, lesdits couloirs de passage et de liaison présentant un axe de symétrie qui passe par le centre du support,
- les rapports entre deux quelconques diamètres hydrauliques de canaux appartenant aux couronnes de filtration appartiennent tous à l'intervalle 0,75 - 1,25, de préférence à l'intervalle 0,95-1,05.

De plus, les couronnes de filtration sont réparties de manière concentrique et séparée les unes des autres par une zone poreuse continue, sans enchevêtrement entre deux couronnes adjacentes. Par ailleurs, si l'élément de filtration selon l'invention présente plus de trois couronnes de filtration, il existe au moins une couronne parmi les trois couronnes les plus proches de la périphérie du support nommées couronnes de rang **n, n-1** et **n-2** dont le nombre de canaux n'est pas un multiple du nombre de canaux de la couronne la plus proche du centre du support, nommée couronne de rang **1.**

Selon une caractéristique essentielle, au niveau des trois couronnes les plus proches de la périphérie du support nommées couronnes de rang **n, n-1** et **n-2,** il existe au moins un sensible alignement de 3 axes adjacents pris parmi les axes des couloirs de passage et de liaison et les axes des canaux, qui favorise la résistance mécanique du support. En d'autres termes, il existe dans la couronne **n,** un axe d'un couloir de passage et de liaison ou un axe d'un canal qui est sensiblement aligné avec un axe d'un couloir de passage et de liaison ou un axe d'un canal de la couronne **n-1,** qui est lui-même sensiblement aligné avec un axe d'un couloir de passage et de liaison ou un axe d'un canal de la couronne **n-2,** ces trois axes sensiblement alignés étant situés du même côté par rapport au centre **A** du support et sont nommés adjacents.

De tels éléments de filtration qui présentent une transparence élevée sont très intéressants pour leur capacité filtrante.

De plus, dans le cadre de l'invention, la demanderesse a évalué les champs de contrainte existants au sein des supports comportant une série d'au moins 3 couronnes de canaux et a mis en évidence que la contrainte maximale se trouvait au niveau des couronnes les plus proches de la périphérie du support. La demanderesse propose de sélectionner des positionnements particuliers des trois couronnes les plus proches de la périphérie du support, dans un souci d'améliorer les performances mécaniques de l'élément de filtration.

Selon un premier mode de réalisation, le sensible alignement entre les axes des couloirs de passage et de liaison et les axes des canaux qui favorise la résistance mécanique du support correspond au fait qu'au moins un axe d'un couloir de passage et de liaison de la couronne la plus proche de la périphérie du support nommée couronne de rang **n,** est sensiblement aligné avec l'axe d'un canal adjacent de la couronne de rang inférieur **n-1**, ledit axe du canal étant lui-même sensiblement aligné avec l'axe d'un couloir de passage et de liaison adjacent de la couronne de rang inférieur n-2.

Selon un deuxième mode de réalisation, le sensible alignement entre les axes des couloirs de passage et de liaison et les axes des canaux qui favorise la résistance mécanique du support correspond au fait qu'au moins un axe d'un canal de la couronne la plus proche de la périphérie du support nommée couronne de rang **n,** est sensiblement aligné avec l'axe d'un couloir de passage et de liaison adjacent de la couronne de rang inférieur **n-1**, ledit axe du couloir de passage et de liaison étant lui-même sensiblement aligné avec l'axe d'un canal adjacent de la couronne de rang inférieur **n-2.**

Les deux modes de réalisation ci-dessus, peuvent également être combinés entre eux.

Selon un mode de réalisation pouvant être combiné aux précédents, au moins un axe d'un couloir de passage et de liaison de la couronne la plus proche de la périphérie du support nommée couronne de rang **n,** est sensiblement aligné avec l'axe d'un couloir de passage et de liaison adjacent de la couronne de rang inférieur **n-1**, ledit axe du couloir de passage et de liaison de la couronne de rang **n-1** étant lui-même sensiblement aligné avec l'axe d'un couloir de passage et de liaison adjacent de la couronne de rang inférieur **n**-**2**.

Selon un mode de réalisation pouvant être combiné aux précédents, au moins un axe d'un canal de la couronne la plus proche de la périphérie du support nommée couronne de rang **n,** est sensiblement aligné avec l'axe d'un canal adjacent de la couronne de rang inférieur **n-1**, ledit axe du canal de la couronne de rang **n-1** étant lui-même sensiblement aligné avec l'axe d'un canal adjacent de la couronne de rang inférieur **n-2.**

Ce que l'on entend par sensiblement aligné, dans chacun des cas ci-dessus, sera défini dans la suite de la description. D'une manière générale, cela signifie qu'une certaine tolérance dans l'alignement peut être accordée, sans toutefois faire chuter trop considérablement les caractéristiques mécaniques de l'élément de filtration. Par exemple, les axes **X** et **Y (Xₙ** et **Yₙ₋₁** et **Yₙ₋₁** et **Xₙ₋₂** ou **Yₙ** et **Xₙ₋₁** et **Xₙ₋₁** et **Yₙ₋₂**) qui sont sensiblement alignés conformément à l'invention sont parfaitement confondus ou forment un angle inférieur ou égal à 3°, et de préférence inférieur à 2° et préférentiellement inférieur à 1°. Dans tous les cas présentés dans la description, le parfait alignement des axes envisagés correspond à la configuration particulièrement préférée.

Un canal ou couloir d'une couronne de rang i et le couloir ou canal qui en est le plus proche dans la couronne voisine de rang **i+1** ou **i-1** sont nommés adjacents.

Selon des modes de réalisation particuliers pouvant être combinés aux précédents qui vont être détaillés dans la description qui va suivre, les éléments de filtration selon l'invention peuvent présenter l'une ou l'autre des caractéristiques ci-dessous ou une quelconque combinaison de ces caractéristiques, voire toutes ces caractéristiques, lorsqu'elles ne s'excluent pas l'une l'autre :
- d'une part, l'axe d'un couloir de passage et de liaison de la couronne la plus proche de la périphérie du support nommée couronne de rang n, est aligné avec l'axe d'un canal adjacent de la couronne de rang inférieur **n-1,** avec une tolérance de +/- 16 % et, de préférence, de +/- 10 % de la valeur du secteur angulaire défini par les deux axes de symétrie des couloirs de passage et de liaison délimitant ledit canal de la couronne de rang **n-1** et, d'autre part, ledit axe du canal est lui-même sensiblement aligné avec l'axe d'un couloir de passage et de liaison adjacent de la couronne de rang inférieur **n-2,** avec une tolérance de +/- 16 % et, de préférence, de +/- 10 % de la valeur du secteur angulaire défini par les deux axes de symétrie des couloirs de passage et de liaison délimitant ledit canal de la couronne de rang **n-1 ;**
- d'une part, l'axe d'un canal de la couronne la plus proche de la périphérie du support nommée couronne de rang **n,** est aligné avec l'axe d'un couloir adjacent de passage et de liaison de la couronne de rang inférieur **n-1,** avec une tolérance de +/- 16 % et, de préférence, de +/- 10 %, et préférentiellement de +/- 5 %, de la valeur du secteur angulaire défini par les deux axes de symétrie des couloirs de passage et de liaison délimitant ledit canal de la couronne de rang **n** et d'autre part, ledit axe du couloir de passage et de liaison est lui-même sensiblement aligné avec l'axe d'un canal adjacent de la couronne (de rang inférieur **n-2,** avec une tolérance de +/- 16 % et, de préférence, de +/- 10 %, et préférentiellement de +/- 5 %, de la valeur du secteur angulaire défini par les deux axes de symétrie des couloirs de passage et de liaison délimitant ledit canal de la couronne de rang **n-2** ;
- d'une part un axe d'un canal de la couronne la plus proche de la périphérie du support nommée couronne de rang n, est aligné avec l'axe d'un canal adjacent de la couronne de rang inférieur **n-1,** avec une tolérance de +/- 16 % et, de préférence, de +/- 10 %, et préférentiellement de +/- 5 %, de la valeur du secteur angulaire défini par les deux axes de symétrie des couloirs de passage et de liaison délimitant ledit canal de la couronne de rang **n-1**, et, d'autre part, ledit axe du canal de la couronne de rang inférieur **n-1** étant lui-même sensiblement aligné avec l'axe d'un canal adjacent de la couronne de rang inférieur **n-2,** avec une tolérance de +/- 16 % et, de préférence, de +/- 10 % de la valeur du secteur angulaire défini par les deux axes de symétrie des couloirs de passage et de liaison délimitant ledit canal de la couronne de rang **n-1 ;**
- d'une part, l'axe d'un couloir de passage et de liaison de la couronne la plus proche de la périphérie du support nommée couronne de rang **n,** est aligné avec l'axe d'un canal adjacent de la couronne de rang inférieur **n-1,** avec une tolérance de +/- 16 % et, de préférence, de +/- 10 %%, et préférentiellement de +/- 5 %, de la valeur du secteur angulaire défini par les deux axes de symétrie des couloirs de passage et de liaison délimitant ledit canal de la couronne de rang **n-1** et, d'autre part, ledit axe du canal est lui-même sensiblement aligné avec l'axe d'un couloir de passage et de liaison adjacent de la couronne de rang inférieur **n-2,** avec une tolérance de +/- 16 % et, de préférence, de +/- 10 %%, et préférentiellement de +/- 5 %, de la valeur du secteur angulaire défini par les deux axes de symétrie des couloirs de passage et de liaison délimitant ledit canal de la couronne de rang **n**-**1** ;
- d'une part, l'axe d'un couloir de passage et de liaison de la couronne la plus proche de la périphérie du support nommée couronne de rang **n,** est aligné avec l'axe d'un couloir adjacent de passage et de liaison de la couronne de rang inférieur **n-1**, avec une tolérance de +/- 3° et, de préférence, de +/- 2°%, et préférentiellement de +/- 1°, d'autre part, ledit du couloir de passage et de liaison de la couronne de rang **n-1** est lui-même sensiblement aligné avec l'axe d'un couloir de passage et de liaison adjacent de la couronne de rang inférieur **n-2,** avec une tolérance de +/- 3° et, de préférence, de +/- 2° et préférentiellement de +/- 1°;
- le nombre de canaux par couronne est croissant des couronnes de rang **n-2** à **n.** Ceci permet notamment d'avoir dans ces trois dernières couronnes, encore une plus faible variabilité du diamètre hydraulique des canaux d'une couronne à l'autre. Le plus souvent, le nombre de canaux dans chacune de ces couronnes sera supérieur ou égal à 4 et augmentera d'au moins 2 canaux par rang supérieur ;
- les rapports entre deux quelconques surfaces de section droite transversale de canaux appartenant aux couronnes de filtration appartiennent tous à l'intervalle 0,75 - 1,25, de préférence à l'intervalle 0,95-1,05 ;
- les couronnes de rang **n, n-1** et **n-2** présentent chacune un nombre de canaux multiple d'un nombre entier **m** et le nombre d'axes d'un couloir de passage et de liaison de la couronne de rang **n** qui sont sensiblement alignés avec l'axe d'un canal adjacent de la couronne de rang inférieur **n-1,** avec ledit axe du canal lui-même sensiblement aligné avec l'axe d'un couloir de passage et de liaison adjacent de la couronne de rang inférieur **n-2** correspond à ce nombre entier **m.** Une telle configuration offre une très bonne résistance à l'éclatement de l'élément de filtration ;
- les canaux d'une même couronne de filtration sont tous identiques et, de préférence, espacés à égale distance les uns des autres. Ils sont également de préférence orientés de la même manière par rapport au centre du support. Ainsi, les contraintes exercées sur les canaux d'une même couronne sont plus homogènes ;
- les largeurs les cloisons de passage sont égales au sein d'une même couronne et égales d'une couronne à l'autre ;
- la largeur de chaque cloison de passage est constante sur toute sa longueur ;
- l'élément de filtration comporte un canal central, de préférence de forme circulaire, et les couronnes de filtration sont réparties de manière concentrique par rapport au canal central ; classiquement, par canal central, on entend un canal dont la section droite transversale passe par l'axe central du support et est centrée sur ledit axe ;
- les couronnes de filtration sont réparties sur des cercles concentriques ;
- tous les canaux des couronnes de filtration sont de section trapézoïdale ou triangulaire ;
- tous les canaux des couronnes de filtration sont, notamment, délimités par deux parois latérales, une paroi externe, des congés de raccordement, et éventuellement une paroi interne, les congés de raccordement présentant chacun un profil en arc de cercle dont le rayon est de préférence supérieur ou égale à 0,3 mm, et appartient préférentiellement à la gamme 0,3 -1,5 mm;
- l'élément de filtration comporte au moins quatre couronnes de filtration et au niveau où un axe d'un couloir de passage et de liaison de la couronne de rang **n** est sensiblement aligné avec l'axe d'un canal adjacent de la couronne de rang inférieur **n-1**, avec ledit axe du canal lui-même sensiblement aligné avec l'axe d'un couloir de passage et de liaison adjacent de la couronne de rang inférieur **n-2,** il y a également sensiblement alignement entre ledit axe du couloir de passage et de liaison de la couronne de rang **n-2** et l'axe du couloir adjacent de passage et de liaison de la couronne de rang **n-3 ;**
- le support présente une section circulaire ou polygonale ;
- l'épaisseur moyenne de la zone poreuse la plus proche de l'axe central est inférieure à l'épaisseur moyenne de la zone poreuse la plus proche de la périphérie du support et lorsque l'on se déplace de l'axe central du support vers sa périphérie, l'épaisseur moyenne d'une zone poreuse est soit identique à la suivante, soit inférieure ;
- la surface des canaux est recouverte par au moins une couche inorganique de filtration.

La présente invention a également pour objet les installations ou modules de filtration comportant un élément de filtration conforme à l'invention dans un carter.

Diverses autres caractéristiques ressortent de la description faite ci-dessous en référence aux dessins annexés qui montrent, à titre d'exemples non limitatifs, des formes de réalisation des supports selon l'invention.
La **Figure 1A** est une vue en coupe transversale, volontairement à plus grande échelle, d'un exemple de réalisation d'un élément de filtration conforme à l'invention.
La **Figure 1B** est une vue en coupe transversale d'un élément de filtration, donné à titre comparatif, analogue à celui de la **Figure 1A****,** mais dans lequel la couronne de rang n a été décalée selon une rotation de 3,75° autour de l'axe longitudinal du support.
La **Figure 1C** est une vue en coupe transversale, d'un élément de filtration, donné à titre comparatif, analogue à celui de la **Figure 1A****,** mais dans lequel la couronne de rang **n-2** a été décalée selon une rotation de 11,25° autour de l'axe longitudinal du support.
La **Figure 2** est une vue en coupe transversale, volontairement à plus grande échelle, d'un autre exemple de réalisation d'un élément de filtration conforme à l'invention.
La **Figure 3A** est une vue en coupe transversale, volontairement à plus grande échelle, d'un autre exemple de réalisation d'un élément de filtration conforme à l'invention.
La **Figure 3B** est une vue en coupe transversale, d'un élément de filtration analogue à celui de la **Figure 3A****,** mais dans lequel la couronne de rang **n-1** a été décalée selon une rotation de 7,5° autour de l'axe longitudinal du support.

La section droite transversale d'un élément de filtration correspond à sa section prise perpendiculairement à son axe central. Généralement, la structure et les dimensions de la section droite transversale sont constantes sur toute la longueur de l'élément de filtration et la géométrie sur cette section est donc représentative de la géométrie de l'élément de filtration multicanal qui présente une symétrie d'extrusion. Dans l'ensemble de la description, les notions d'angle, d'épaisseur, de section et de déplacement au sein du support s'entendent dans le plan d'une section droite transversale du support. Sur une section droite transversale du support, on nommera indifféremment l'axe du support et le centre du support.

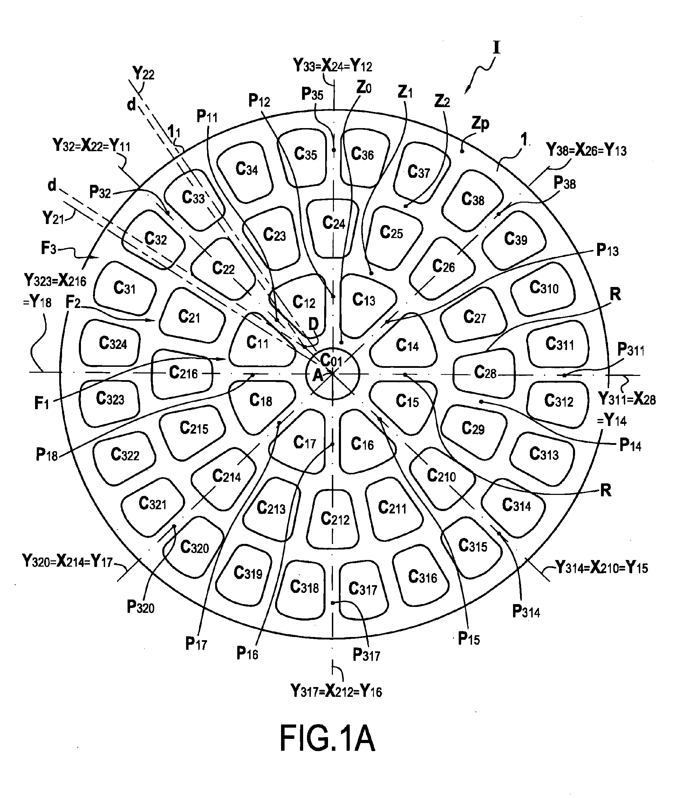

Tel que cela ressort des différentes **Figures 1A****,** **2**, 3A et **3B****,** l'élément inorganique de filtration **I** est de forme adaptée pour assurer la séparation ou la filtration de molécules ou de particules contenues dans un milieu fluide, de préférence liquide, de nature diverse comportant une phase solide ou non. L'élément de filtration **I** comporte un support poreux rigide 1 constitué dans une matière dont la résistance au transfert est adaptée à la séparation à effectuer. En particulier, le support **1** est réalisé à partir d'un ou plusieurs matériaux inorganiques, tels que des oxydes métalliques (dioxyde de titane, alumine, zircone notamment), du carbone, du carbure ou nitrure de silicium ou des métaux. Le support **I** est réalisé sous une forme allongée ou sous la forme d'un conduit s'étendant selon un axe central longitudinal **A.** Le support poreux **1** possède généralement un diamètre moyen hydraulique de pores compris entre 2 et 12 µm. Le support **1** possède une section droite transversale qui peut être de différentes formes, par exemple hexagonale ou, comme dans les modes de réalisation illustrés sur les Figures, circulaire. Le support **1** offre ainsi une surface extérieure **1₁** cylindrique.

Le support 1 est aménagé pour comporter une pluralité de canaux **C₀₁**, **C₁₁**, **C₁₂**..., **C₂₁**, **C₂₂** ..., **Cₙ₁**, **Cₙ₂**... (nommés génériquement **Cᵢⱼ**) réalisés parallèlement à l'axe longitudinal **A** du support. Les canaux sont répartis en zone de filtration de rang **i,** chaque zone de filtration pouvant comporter un ou plusieurs canaux et étant séparées par une zone poreuse. Ainsi, Chaque zone poreuse **Z** est comprise entre deux zones de filtration, chaque zone de filtration comportant un canal ou une pluralité de canaux, lorsqu'il s'agit d'une couronne de filtration. Les canaux **Cᵢⱼ** présentent chacun une surface **2** qui peut être recouverte par au moins une couche séparatrice non représentée, destinée à être en contact avec le milieu fluide à traiter circulant à l'intérieur des canaux. La nature de la ou des couches séparatrices est choisie en fonction du pouvoir de séparation ou de filtration à obtenir et forme avec le support une liaison intime, de sorte que la pression provenant du milieu liquide soit transmise au support poreux **1.** Cette ou ces couches peuvent être déposées à partir, par exemple, de suspensions contenant au moins un oxyde métallique du type dioxyde de titane, alumine, zircone notamment, éventuellement en mélange et classiquement utilisées dans la production des éléments de filtration minéraux. Cette ou ces couches sont soumises, après séchage, à une opération de frittage qui permet de les consolider et de les lier entre-elles ainsi qu'au support poreux **1.**

Conformément à l'invention, le support **1** comporte au moins trois couronnes de filtration **F₁, F₂**, ...**Fₙ** (nommée génériquement **Fᵢ**) qui sont réparties de manière concentrique. Deux couronnes de filtration adjacentes (c'est-à-dire successives ou voisines) sont séparées par une zone poreuse continue. Une zone poreuse **Z** vient donc s'intercaler entre deux couronnes de filtration **F** voisines. Les zones poreuses qui sont des zones de matière poreuse dans lesquelles le filtrat circule sont qualifiées de continues car il y a une délimitation claire entre deux couronnes de filtration adjacentes, c'est-à-dire qu'il n'y a pas d'enchevêtrement, ni de recoupement entre deux couronnes de filtration adjacentes. En d'autres termes, un canal d'une couronne de filtration ne peut se trouver, même pour partie seulement, entre deux canaux d'une couronne de filtration adjacente.

Chaque couronne constitue une zone de filtration et peut être définie comme un ensemble de canaux situés sur une courbe fermée, c'est-à-dire que les barycentres de ces canaux sont situés sur cette courbe. Dans les exemples illustrés, les canaux d'une même couronne sont situés sur un cercle.

Au sein de chaque couronne, les canaux sont de sections droites non circulaires. Dans les exemples illustrés, les canaux des couronnes sont de forme trapézoïdale. D'une manière plus générale, les canaux des couronnes de filtration définissent des secteurs de ces couronnes de filtration dont la forme est adaptée aux nécessités de la filtration et de la résistance mécanique. Ces canaux possèdent une paroi faisant face à la périphérie **1₁** du support (dite paroi externe), une paroi faisant face au centre **A** du support (dite paroi interne), et deux parois latérales **R** reliant la paroi interne et la paroi externe. Le plus souvent, les parois latérales sont reliées aux parois interne et externe par des congés de raccordement. Dans certains cas, la paroi interne pourra être remplacée par un congé de raccordement reliant les deux parois latérales **R.** Les points extrêmes d'une paroi sont les points situés à ces deux extrémités, juste avant les congés de raccordement. Pour chaque paroi latérale, on définit une direction **d** qui relie ces deux points extrêmes. Dans le cadre de l'invention, cette direction **d** est dirigée vers le centre du support et les parois latérales **R** seront également nommées parois radiales. Néanmoins, cette direction **d** ne passe pas nécessairement par le centre du support. Mais, les directions **d** des deux parois radiales **R** d'un même canal se coupent en un point situé du côté du centre du support, par rapport audit canal, et notamment en un point **D** situé entre ledit canal et le centre du support, comme sur l'exemple illustré **Figure 1A****.** Selon les variantes illustrées sur les Figures, les parois radiales **R** qui participent à la définition du contour d'un canal correspondent à deux côtés droits et la direction d est donc confondue avec ces côtés. Par ailleurs, deux canaux d'une même couronne sont dits voisins s'ils ont en commun un couloir P de passage et de liaison. Ce couloir **P** de passage et de liaison constitue donc une cloison séparant deux canaux voisins d'une même couronne.

Pour la suite de la description, il est considéré que les couronnes de filtration et les zones poreuses occupent des rangs différents qui augmentent en direction de la périphérie du support. Ainsi, pour deux couronnes de filtration (ou zone poreuse) considérées, la couronne de filtration (ou respectivement la zone poreuse) la plus proche de la périphérie est considérée d'un rang supérieur par rapport à une couronne de filtration (ou respectivement une zone poreuse) plus proche du centre et considérée comme une couronne de filtration (ou respectivement une zone poreuse) d'un rang inférieur. Aussi, une couronne de rang donné est entourée par la ou les couronne(s) de rang supérieur.

Dans l'exemple illustré à la **Figure 1A****,** le support comporte trois couronnes de filtration **F₁** à **F₃** et un canal central **C₀₁,** ce qui permet notamment d'éviter une accumulation de matière au centre du support. Dans l'exemple illustré, le canal central **C₀₁** est de forme circulaire, mais une forme du type polygonale ou autre, pourrait également être prévue. Par contre, chaque couronne de filtration est composée d'une série de canaux non-circulaires. Le canal central est séparé de la couronne de filtration de rang **1,** par une zone poreuse **Z₀**. Les couronnes de filtration **F₁** et F**₂** sont séparées par une zone poreuse **Z₁** et les couronnes de filtration **F₂** et **F₃** sont séparées par une zone poreuse **Z₂.** Dans chaque couronne de filtration, les canaux sont séparés par des cloisons de passage pour le filtrat, nommées génériquement **P** et **P₁** dans la couronne de rang **1, P₂** dans la couronne de rang **2** et **P₃** dans la couronne de rang 3. Ces cloisons de passage **P₁, P₂** et **P₃** permettent au filtrat de cheminer à l'intérieur du support d'une zone poreuse à l'autre, jusqu'à la zone périphérique **Zp,** également poreuse, pour déboucher sur la surface extérieure **1₁** du support **1.** Sur l'exemple illustré Figure **1A****,** les canaux de la couronne **F₃**, la plus proche de la périphérie du support, présente un profil en forme de voute comme décrit dans le brevet FR2741821 au nom de la demanderesse. Mais, il pourrait tout aussi bien être prévu que la largeur de la zone **Zp** située entre la paroi externe d'un canal de la couronne **F₃** et la périphérie **1₁** du support soit constante.

Afin de faciliter le cheminement du filtrat, lesdits couloirs **P₁**, **P₂** et **P₃** de passage et de liaison présentent un axe de symétrie, qui passe par le centre **A** du support. Ces axes de symétries sont nommés génériquement **Y** et **Y₁** dans la couronne de rang 1, **Y₂** dans la couronne de rang **2** et **Y₃** dans la couronne de rang **3.** Les couloirs **P** et les axes de symétrie **Y** sont indexés de la manière suivante : au sein d'une couronne de rang i, le couloir de passage et de liaison situé entre les canaux **Cᵢⱼ** et **Cᵢ₍ⱼ₊₁₎** est nommé **Pᵢⱼ** et son axe de symétrie **Yᵢⱼ.**

Les différents canaux des couronnes de filtration présentent également un axe de symétrie nommé génériquement **X** qui passe par le centre du support, par souci d'optimisation de la surface filtrante. Ces axes de symétries sont nommés génériquement **X₁** dans la couronne de rang **1, X₂** dans la couronne de rang **2** et **X₃** dans la couronne de rang **3** et, selon une dénomination plus spécifique, ils portent la même indexation que le canal dont ils sont l'axe.

Ces couronnes de filtration **F₁** à **F₃** sont réparties comme suit lorsque l'on se déplace de l'axe central **A** vers la périphérie **1₁** du support :
- la couronne de filtration de rang **1 F₁** est constituée de 8 canaux **C₁₁** à **C₁₈** identiques et de forme trapézoïdale,
- la couronne de filtration de rang 2 **F₂** est constituée de 16 canaux **C₂₁** à **C₂₁₆** identiques et de forme trapézoïdale,
- la couronne de filtration de rang 3 **F₃** est constituée d'une couronne de 24 canaux **C₃₁** à **C₃₂₄** identiques et de forme trapézoïdale.

Le nombre de canaux présents dans chaque couronne de filtration augmente donc lorsque l'on se déplace du centre vers la périphérie du support.

Les canaux d'une même couronne sont qualifiés d'identiques, étant donné qu'ils ont notamment la même forme, la même section et le même diamètre hydraulique aux faibles variations près dues au procédé de fabrication. Selon un mode précis de réalisation, le diamètre externe du support pourra être de 41 mm, et les diamètres hydrauliques moyens (correspondant à la moyenne arithmétique de tous les diamètres hydrauliques des canaux d'une couronne) sur les couronnes de rangs **1, 2** et **3,** respectivement de 4,00 - 4,04 - 4,00 et de 4,00 mm pour le canal central **C₀₁**. Il existe donc également une faible variabilité des diamètres hydrauliques d'une couronne à l'autre. Il en va de même des surfaces des sections droites transversales. Les surfaces des sections droites transversales moyennes (correspondant à la moyenne arithmétique de toutes les surfaces des sections droites transversales des canaux d'une couronne) sur les couronnes de rangs **1, 2** et **3,** sont respectivement de 14,7 - 14,5 - 13,8 et de 12,5 mm² pour le canal central **C₀₁**.

Les couronnes de filtration **F₁** à **F₃** sont réparties de manière concentrique par rapport au canal central **C₀₁**. Les barycentres des canaux **C₁₁, C₁₂**.... **C₁₈** de la couronne de rang **1 F₁** sont situés sur un cercle coaxial à l'axe central **A,** ce cercle coaxial présentant un diamètre inférieur par rapport au cercle coaxial sur lequel sont situés les barycentres des canaux **C₂₁, C₂₂.... C₂₁₆** de la couronne de filtration de rang **2 F₂** et ainsi de suite.

Selon une caractéristique essentielle de l'invention, dans le mode de réalisation présenté **Figure 1A****,** au moins un axe **Y₃** d'un couloir **P₃** de passage et de liaison de la couronne de rang **3 F₃** la plus proche de la périphérie **1₁** du support 1 est sensiblement aligné avec l'axe **X₂** d'un canal adjacent de la couronne **F₂** de rang inférieur **2,** ledit axe **X₂** du canal étant lui-même sensiblement aligné avec l'axe **Y₁** d'un couloir **P₁** de passage et de liaison adjacent de la couronne **F₁** de rang inférieur **1.** Dans le cadre de l'invention, on considère que l'axe **Y** d'un couloir de passage **P** est sensiblement aligné avec l'axe de symétrie **X** d'un canal, lorsque les deux axes sont confondus ou forment un angle d'une valeur angulaire inférieure à +/- 16 % et, de préférence, inférieure à +/- 10 %, et notamment inférieur à +/- 5%, de la valeur du secteur angulaire défini par les deux axes de symétrie des couloirs de passage et de liaison délimitant ledit canal. Le secteur angulaire défini par deux axes **Y** voisins correspond, par exemple, à un angle de 5 à 60°. En particulier, les deux axes **Xₙ₋₁** et **Yₙ** d'une part et **Yₙ₋₂** et **Xₙ₋₁** d'autre part qui sont sensiblement alignés conformément à l'invention sont parfaitement confondus ou forment un angle inférieur ou égal à 3°, et de préférence inférieur à 2° et préférentiellement inférieur à 1°. Selon une variante préférée, **Yₙ**, **Xₙ₋₁** et **Yₙ₋₂** sont parfaitement alignés. Le double alignement conforme à l'invention permet à l'élément de filtration de résister à des pressions importantes mises en oeuvre. En effet, la demanderesse a constaté que les contraintes maximales situées dans la zone où débouche le couloir **P₃** de passage et de liaison de la couronne de rang **3** au niveau du milieu de la paroi externe du canal de la couronne de rang **2,** étaient compensées par le fait que le couloir **P₁** de passage et de liaison de la couronne **F₁** de rang 1 débouchait sensiblement au milieu de la paroi interne de ce même canal de la couronne de rang **2..**

Sur la **Figure 1A****,** étant donné que dans une même couronne et donc notamment sur la couronne **F₂**, tous les canaux sont identiques et régulièrement espacés les uns des autres, les secteurs angulaires définis par deux axes de symétrie **Y₂** (par exemple **Y₂₁** et **Y₂₂**) des couloirs de passages **P₂** entourant un canal de la couronne de rang **2** sont tous égaux. Dans l'exemple illustré, ces secteurs angulaires sont égaux à 15°. Par ailleurs, **Figure 1A****,** on observe une double superposition exacte d'axes conformément à l'invention, à 8 reprises sur une section droite transversale du support. Le nombre de canaux présents sur chacune des couronnes **F₁** à **F₃** est un multiple de ce nombre 8. Il y a strict alignement :
- d'une part, entre l'axe **Y₃₂** du couloir **P₃₂** de passage et de liaison de la couronne de rang 3 **F₃** la plus proche de la périphérie **1₁** du support **1** et l'axe **X₂₂** du canal **C₂₂** adjacent de la couronne **F₂** de rang inférieur **2,** et d'autre part entre l'axe **X₂₂** du canal **C₂₂** et l'axe **Y₁₁** du couloir **P₁₁** de passage et de liaison adjacent de la couronne **F₁** de rang inférieur **1,** et
- d'une part, entre l'axe **Y₃₅** du couloir **P₃₅** de passage et de liaison de la couronne de rang **3 F₃** et l'axe **X₂₄** du canal **C₂₄** adjacent de la couronne **F₂** de rang inférieur 2, et d'autre part entre l'axe **X₂₄** du canal **C₂₄** et l'axe **Y₁₂** du couloir **P₁₂** de passage et de liaison adjacent de la couronne **F₁** de rang inférieur **1,** et
- d'une part, entre l'axe **Y₃₈** du couloir **P₃₈** de passage et de liaison de la couronne de rang 3 **F₃** et l'axe **X₂₆** du canal **C₂₆** adjacent de la couronne **F₂** de rang inférieur 2, et d'autre part entre l'axe **X₂₆** du canal **C₂₆** et l'axe **Y₁₃** du couloir **P₁₃** de passage et de liaison adjacent de la couronne **F₁** de rang inférieur **1,** et
- d'une part, entre l'axe **Y₃₁₁** du couloir **P₃₁₁** de passage et de liaison de la couronne de rang 3 **F₃** et l'axe **X₂₈** du canal **C₂₈** adjacent de la couronne F**₂** de rang inférieur 2, et d'autre part entre l'axe **X₂₈** du canal **C₂₈** et l'axe **Y₁₄** du couloir **P₁₄** de passage et de liaison adjacent de la couronne **F₁** de rang inférieur 1, et
- d'une part, entre l'axe **Y₃₁₄** du couloir **P₃₁₄** de passage et de liaison de la couronne de rang **3 F₃** et l'axe **X₂₁₀** du canal **C₂₁₀** adjacent de la couronne **F₂** de rang inférieur 2, et d'autre part entre l'axe **X₂₁₀** du canal **C₂₁₀** et l'axe **Y₁₅** du couloir **P₁₅** de passage et de liaison adjacent de la couronne **F₁** de rang inférieur **1,** et
- d'une part, entre l'axe **Y₃₁₇** du couloir **P₃₁₇** de passage et de liaison de la couronne de rang 3 **F₃** et l'axe **X₂₁₂** du canal **C₂₁₂** adjacent de la couronne **F₂** de rang inférieur **2,** et d'autre part entre l'axe **X₂₁₂** du canal **C₂₁₂** et l'axe **Y₁₆** du couloir **P₁₆** de passage et de liaison adjacent de la couronne **F₁** de rang inférieur 1, et
- d'une part, entre l'axe **Y₃₂₀** du couloir **P₃₂₀** de passage et de liaison de la couronne de rang 3 **F₃** et l'axe **X₂₁₄** du canal **C₂₁₄** adjacent de la couronne **F₂** de rang inférieur **2,** et d'autre part entre l'axe **X₂₁₄** du canal **C₂₁₄** et l'axe **Y₁₇** du couloir **P₁₇** de passage et de liaison adjacent de la couronne **F₁** de rang inférieur 1, et
- d'une part, entre l'axe **Y₃₂₃** du couloir **P₃₂₃** de passage et de liaison de la couronne de rang **3 F₃** et l'axe **X₂₁₆** du canal **C₂₁₆** adjacent de la couronne **F₂** de rang inférieur 2, et d'autre part entre l'axe **X₂₁₆** du canal **C₂₁₆** et l'axe **Y₁₈** du couloir **P₁₈** de passage et de liaison adjacent de la couronne **F₁** de rang inférieur **1.**

Il convient également de noter que la section droite transversale représentée **Figure 1A** présente 4 axes de symétrie.

Dans l'exemple illustré, il y a également alignement entre les axes **X** adjacents de différents canaux des couronnes **1, 2** et **3,** et ce à 8 reprises (au niveau des canaux **C₁₁**, **C₂₁** et **C₃₁** ; des canaux **C₁₂**, **C₂₃** et **C₃₄** ; des canaux **C₁₃**, **C₂₅** et **C₃₇** ; des canaux **C₁₄**, **C₂₇** et **C₃₁₀** ; des canaux **C₁₅**, **C₂₉** et **C₃₁₃** ; des canaux **C₁₆, C₂₁₁** et **C₃₁₆** ; des canaux **C₁₇**, **C₂₁₃** et **C₃₁₉** et des canaux **C₁₈**, **C₂₁₅** et **C₃₂₂**).

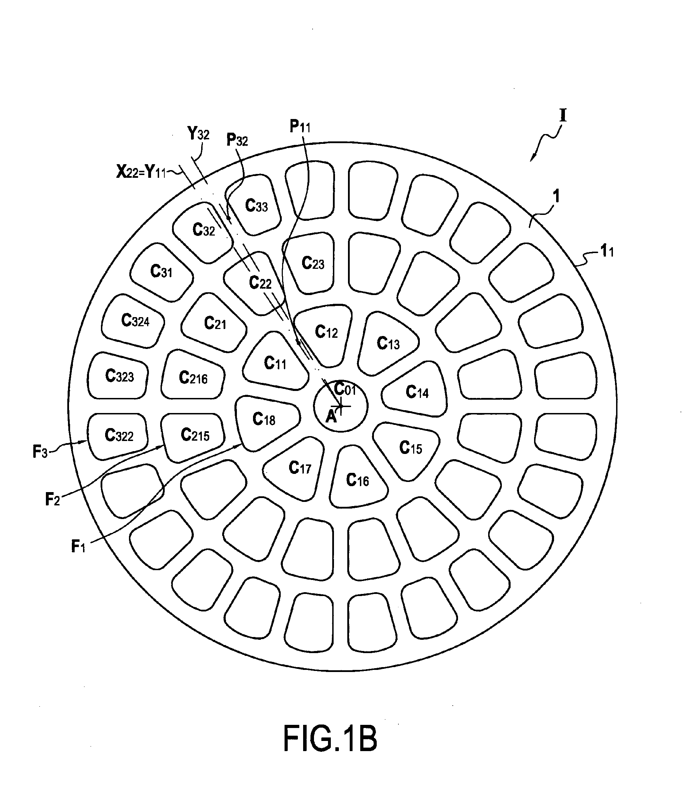

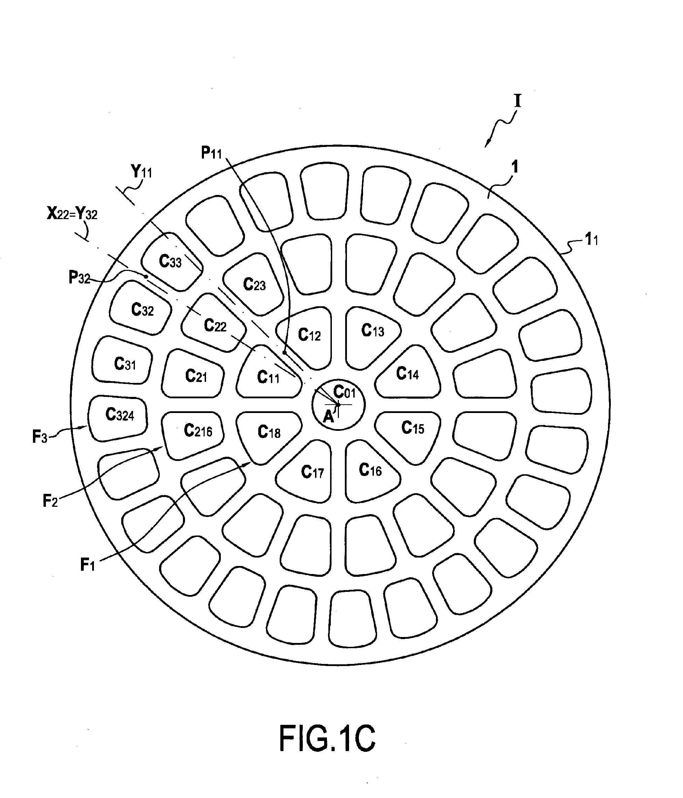

Afin de mettre en évidence l'apport de l'invention, une étude a été réalisée avec le logiciel Abaqus pour évaluer les champs de contrainte existant au sein du support, lorsqu'une sollicitation correspondant à une pression de 100 MPa est imposée dans chacun des canaux. Il est important de noter que la distribution des contraintes est rigoureusement la même, quelque soit la force interne appliquée. Les conclusions tirées de ses calculs sont donc rigoureusement indépendantes de la valeur de pression interne saisie. Un support conforme à la **Figure 1A** a été comparé aux supports conformes aux **Figures 1B** et **1C** réalisés à titre de comparaison. Les **Figures 1B** et **1C** sont en tout point identiques à la **Figure 1A****,** seule une rotation d'un angle donné par rapport à l'axe longitudinal **A** a été appliquée, soit à la couronne de rang **3,** soit à la couronne de rang **1.** Dans la **Figure 1B****,** la couronne de rang **3** a été décalée selon une rotation de 3,75° autour de l'axe longitudinal **A** du support, alors que dans la **Figure 1C** c'est la couronne de rang **1** qui a été décalée selon une rotation de 11,25 ° autour de l'axe longitudinal **A** du support. En effet, sur la **Figure 1B****,** alors que les axes **Y₃₂, X₂₂** et **Y₁₁** étaient alignés sur la **Figure 1A****,** les axes **X₂₂** et **Y₁₁** sont toujours alignés mais décalés de 3,75 °par rapport à l'axe **Y₃₂.** De même sur la **Figure 1C****,** les axes **X₂₂** et **Y₃₂** sont toujours alignés mais décalés de 11,25 ° par rapport à l'axe **Y₁₁.** La contrainte maximale calculée pour la **Figure 1A** est de 71,5 MPa, contre respectivement 77,4 MPa et 80,7 MPa pour les **Figures 1B** et **1C****.** Il apparaît donc que la nouvelle disposition des canaux dans les couronnes de rang **n** à **n-2** (correspondant aux rangs **3** à **1** dans les Figures **1A** à **1C**) conforme à l'invention réduit significativement les zones locales de fragilité. Les contraintes observées sont reliées à la pression exercée par le fluide à l'intérieur des canaux, notamment en cas de coup de bélier. Cette pression interne tend à déformer et donc à contraindre le matériau. La configuration géométrique selon l'invention permet d'obtenir une répartition des contraintes plus équilibrée au sein de la section du support. Le fait, par exemple, de retrouver sur la section m fois la configuration optimale, à intervalle d'angle régulier, va dans le sens de cet équilibrage qui limite les effets de cisaillement. Plus une configuration est déséquilibrée, plus il y a association de zones de forte rigidité (où toutes les cloisons radiales seraient alignées) avec des zones de faibles rigidités (aucun alignement) donc de fortes déformations, ce qui débouche sur un effet plus important de cisaillement entre ces deux zones.

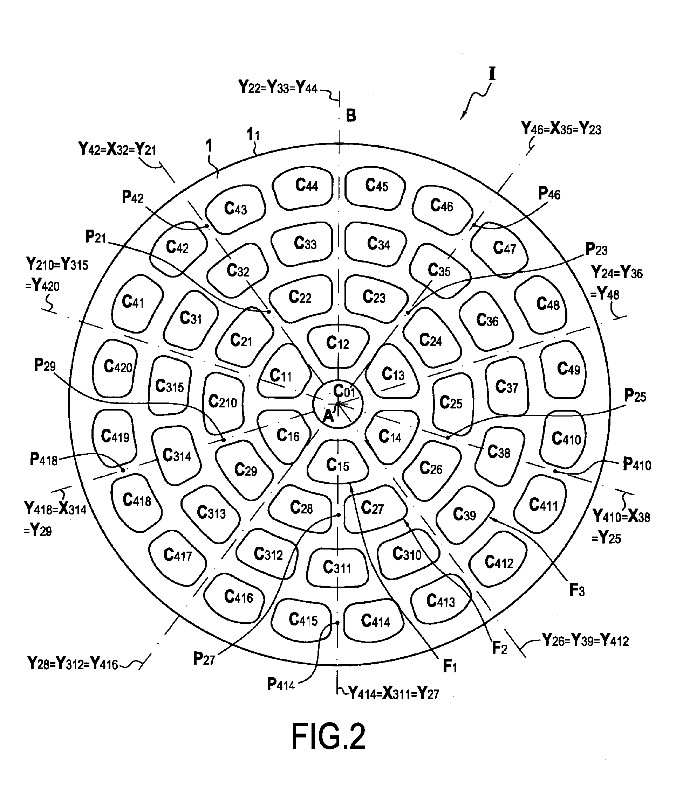

La **Figure 2** illustre un autre exemple de réalisation de l'invention dans lequel le support **1** comporte 4 couronnes de filtration **F₁** à **F₄.** Là encore, le support comporte également un canal central **C₀₁** de forme circulaire dans l'exemple illustré, autour duquel sont réparties de manière concentrique les couronnes de filtration **F₁** à **F₄.** Ces zones de filtration sont réparties comme suit lorsque l'on se déplace de l'axe central **A** vers la périphérie **1₁** du support **1:**
- la couronne de filtration de rang **1 F₁** est constituée de 6 canaux **C₁₁** à **C₁₆** identiques et de forme trapézoïdale,
- la couronne de filtration de rang **2 F₂** est constituée de 10 canaux **C₂₁** à **C₂₁₀** identiques et de forme trapézoïdale,
- la couronne de filtration de rang **3 F₃** est constituée de 15 canaux **C₃₁** à **C₃₁₅** identiques et de forme trapézoïdale, et
- la couronne de filtration de rang **4 F₄** est constituée de 20 canaux **C₄₁** à **C₄₂₀** identiques et de forme trapézoïdale.

Selon un mode précis de réalisation, le diamètre externe du support pourra être de 25 mm, et les diamètres hydrauliques moyens sur les couronnes de rangs **1, 2, 3** et **4,** respectivement de 2,30 - 2,32 - 2,31-2,28 et de 2,30 mm pour le canal central **C₀₁**. Il existe donc également une faible variabilité des diamètres hydrauliques d'une couronne à l'autre. Il en va de même des surfaces des sections droites transversales. Les surfaces des sections droites transversales moyennes (correspondant à la moyenne arithmétique de toutes les surfaces des sections droites transversales des canaux d'une couronne) sur les couronnes de rangs **1, 2, 3** et **4** sont respectivement de 4,6 - 4,8 - 4,7 - 4,5 et de 4,2 mm² pour le canal central **C₀₁**.

Sur la **Figure 2**, les couronnes de rangs n à **n-2** correspondent aux couronnes de rangs **2** à **4.** Sur cet exemple de mise en oeuvre, on observe une double superposition exacte d'axes conformément à la caractéristique essentielle de l'invention, à 5 reprises sur une section droite transversale du support. Le nombre de canaux présents sur chacune des couronnes F**₂** à **F₄** est un multiple de ce nombre 5. Par contre, le nombre de canaux présents sur chacune des couronnes **F₂** à **F₄** (respectivement de 10, 15 et 20) n'est pas un multiple de 6 correspondant au nombre de canaux de la couronne **F₁** la plus proche du centre du support.

Il y a strict alignement :
- d'une part, entre l'axe **Y₄₂** du couloir **P₄₂** de passage et de liaison de la couronne de rang 4 **F₄** la plus proche de la périphérie **1₁** du support **1** et l'axe **X₃₂** du canal **C₃₂** adjacent de la couronne **F₃** de rang inférieur **3,** et d'autre part entre l'axe **X₃₂** du canal **C₃₂** et l'axe **Y₂₁** du couloir **P₂₁** de passage et de liaison adjacent de la couronne **F₂** de rang inférieur 2, et
- d'une part, entre l'axe **Y₄₆** du couloir **P₄₆** de passage et de liaison de la couronne de rang **4 F₄** et l'axe **X₃₅** du canal **C₃₅** adjacent de la couronne **F₃** de rang inférieur 3, et d'autre part entre l'axe **X₃₅** du canal **C₃₅** et l'axe **Y₂₃** du couloir **P₂₃** de passage et de liaison adjacent de la couronne **F₂** de rang inférieur **2,** et
- d'une part, entre l'axe **Y₄₁₀** du couloir **P₄₁₀** de passage et de liaison de la couronne de rang 4 **F₄** et l'axe **X₃₈** du canal **C₃₈** adjacent de la couronne **F₃** de rang inférieur 3, et d'autre part entre l'axe **X₃₈** du canal **C₃₈** et l'axe **Y₂₅** du couloir **P₂₅** de passage et de liaison adjacent de la couronne **F₂** de rang inférieur **2,** et
- d'une part, entre l'axe **Y₄₁₄** du couloir **P₄₁₄** de passage et de liaison de la couronne de rang 4 **F₄** et l'axe **X₃₁₁** du canal **C₃₁₁** adjacent de la couronne **F₃** de rang inférieur **3,** et d'autre part entre l'axe **X₃₁₁** du canal **C₃₁₁** et l'axe **Y₂₇** du couloir **P₂₇** de passage et de liaison adjacent de la couronne **F₂** de rang inférieur **2**, et
- d'une part, entre l'axe **Y₄₁₈** du couloir **P₄₁₈** de passage et de liaison de la couronne de rang **4 F₄** et l'axe **X₃₁₄** du canal **C₃₁₄** adjacent de la couronne **F₃** de rang inférieur 3, et d'autre part entre l'axe **X₃₁₄** du canal **C₃₁₄** et l'axe **Y₂₉** du couloir **P₂₉** de passage et de liaison adjacent de la couronne **F₂** de rang inférieur **2**.

Il convient également de noter que la section droite transversale du support **1** représentée **Figure 2** présente un axe de symétrie **B.**

Dans l'exemple illustré, il y a également alignement entre les axes **Y** adjacents de différents couloirs de passages et d'acheminement des couronnes **2, 3** et **4,** et ce à 5 reprises (au niveau des axes **Y₂₂**, **Y₃₃** et **Y₄₄** ; des axes **Y₂₄**, **Y₃₆** et **Y₄₈** ; des axes **Y₂₆**, **Y₃₉** et **Y₄₁₂** ; des axes **Y₂₈, Y₃₁₂** et **Y₄₁₆** ; et des axes **Y₂₁₀, Y₃₁₅** et **Y₄₂₀**).

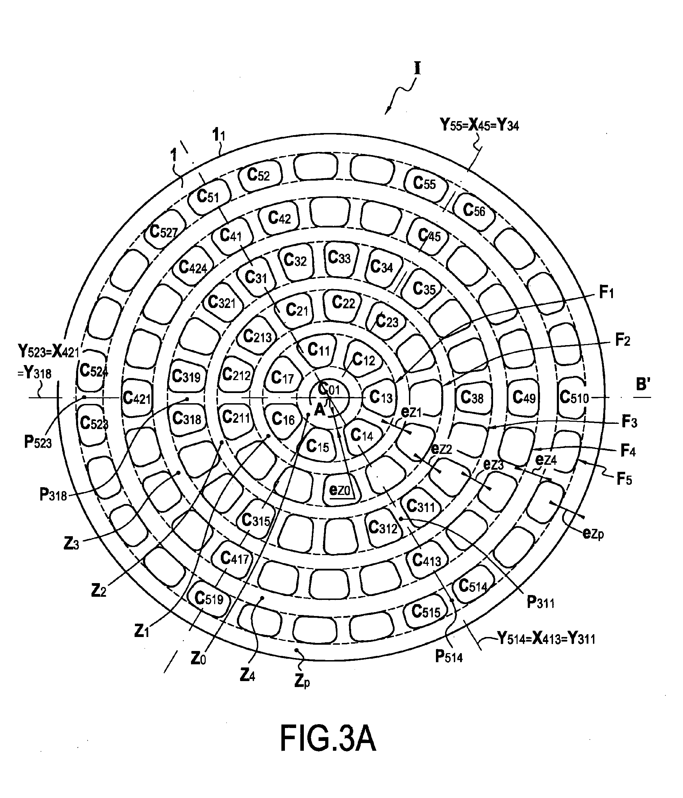

La **Figure 3A** illustre un autre exemple de réalisation de l'invention dans lequel le support comporte cinq couronnes de filtration **F₁** à **F₅** et un canal central **C₀₁** de forme circulaire, bien que là encore une forme du type polygonale ou autre, pourrait également être prévue. Le canal central est séparé de la couronne de filtration de rang **1**, par une zone poreuse **Z₀.** Les couronnes de filtration **F₁** et F**₂** sont séparées par une zone poreuse **Z₁**, les couronnes de filtration F**₂** et **F₃** sont séparées par une zone poreuse **Z₂,** les couronnes de filtration **F₃** et **F₄** sont séparées par une zone poreuse **Z₃** et les couronnes de filtration **F₄** et **F₅** sont séparées par une zone poreuse **Z₄.** Les couronnes de filtration **F₁** à **F₅** concentriques par rapport au canal central **C₀₁** sont réparties comme suit lorsque l'on se déplace de l'axe central A vers la périphérie **1₁** du support :
- la couronne de filtration de rang 1 **F₁** est constituée de 7 canaux **C₁₁** à **C₁₇** identiques et de forme trapézoïdale,
- la couronne de filtration de rang 2 **F₂** est constituée de 13 canaux **C₂₁** à **C₂₁₃** identiques et de forme trapézoïdale,
- la couronne de filtration de rang 3 **F₃** est constituée de 21 canaux **C₃₁** à **C₃₂₁** identiques et de forme trapézoïdale,
- la couronne de filtration de rang **4 F₄** est constituée de 24 canaux **C₄₁** à **C₄₂₄** identiques et de forme trapézoïdale, et
- la couronne de filtration de rang **5 F₅** est constituée de 27 canaux **C₅₁** à **C₅₂₇** identiques et de forme trapézoïdale.

Selon un mode précis de réalisation, le diamètre externe du support pourra être de 25 mm, et les diamètres hydrauliques moyens sur les couronnes de rangs **1, 2, 3, 4** et **5,** respectivement de 1,57 - 1,60 - 1,60 - 1,62 - 1,62 et de 1,80 mm pour le canal central **C₀₁**. Il existe donc également une faible variabilité des diamètres hydrauliques d'une couronne à l'autre. Il en va de même des surfaces des sections droites transversales. Les surfaces des sections droites transversales moyennes (correspondant à la moyenne arithmétique de toutes les surfaces des sections droites transversales des canaux d'une couronne) sur les couronnes de rangs 1, 2, **3, 4** et **5** sont respectivement de 2,1 - 2,1 - 2,2 - 2,2 - 2,3 et de 2,5 mm² pour le canal central **C₀₁**.

Sur la **Figure 3A****,** les couronnes de rangs **n** à **n-2** correspondent aux couronnes de rangs **5** à **3.** Sur cet exemple de mise en oeuvre, on observe une double superposition exacte d'axes conformément à la caractéristique essentielle de l'invention, à 3 reprises sur une section droite transversale du support. Le nombre de canaux présents sur chacune des couronnes **F₃** à **F₅** est un multiple de ce nombre 3. Par contre, le nombre de canaux présents sur les couronnes **F₄** et **F₅** (respectivement de 24 et 27) n'est pas un multiple de 7 correspondant au nombre de canaux de la couronne **F₁** la plus proche du centre du support.

Il y a strict alignement :
- d'une part, entre l'axe **Y₅₅** du couloir **P₅₅** de passage et de liaison de la couronne de rang **5 F₅** la plus proche de la périphérie **1₁** du support 1 et l'axe **X₄₅** du canal **C₄₅** adjacent de la couronne **F₄** de rang inférieur 4, et d'autre part entre l'axe **X₄₅** du canal **C₄₅** et l'axe **Y₃₄** du couloir **P₃₄** de passage et de liaison adjacent de la couronne **F₃** de rang inférieur **3,** et
- d'une part, entre l'axe **Y₅₁₄** du couloir **P₅₁₄** de passage et de liaison de la couronne de rang **5 F₅** et l'axe **X₄₁₃** du canal **C₄₁₃** adjacent de la couronne **F₄** de rang inférieur **4,** et d'autre part entre l'axe **X₄₁₃** du canal **C₄₁₃** et l'axe **Y₃₁₁** du couloir **P₃₁₁** de passage et de liaison adjacent de la couronne **F₃** de rang inférieur **3,** et
- d'une part, entre l'axe **Y₅₂₃** du couloir **P₅₂₃** de passage et de liaison de la couronne de rang 5 **F₅** et l'axe **X₄₂₁** du canal **C₄₂₁** adjacent de la couronne **F₄** de rang inférieur 4, et d'autre part entre l'axe **X₄₂₁** du canal **C₄₂₁** et l'axe **Y₃₁₈** du couloir **P₃₁₈** de passage et de liaison adjacent de la couronne **F₃** de rang inférieur **3.**

Il convient également de noter que la section droite transversa3le du support **1** représentée **Figure 3A** présente un axe de symétrie **B'.** Au niveau de cet axe de symétrie **C** qui coïncide avec les axes **Y₅₂₃**, **X₄₂₁** et **Y₃₁₈,** il y a également parfait alignement entre l'axe du couloir séparant les canaux **C₂₁₂** et **C₂₁₁** de la couronne de rang **2** et l'axe **X₃₁₈** du couloir séparant les canaux **C₃₁₈** et **C₃₁₉** de la couronne de rang supérieur **3,** axe lui-même aligné avec les axes **Y₅₂₃** et **X₄₂₁.**

Dans l'exemple illustré, il y a également alignement entre les axes **X** adjacents de différents canaux des couronnes **3, 4** et **5,** et ce à 3 reprises (au niveau des canaux **C₃₁, C₄₁** et **C₅₁ ;** des canaux **C₃₈**, **C₄₉** et **C₅₁₀** et des canaux **C₃₁₅**, **C₄₁₇** et **C₅₁₉**).

Par ailleurs, sur l'exemple illustré **Figure 3A****,** l'épaisseur de chacune des zones de filtration **Z₀** à **Z₄** et de la zone périphérique **Zp** ne sont pas toutes identiques. Dans l'exemple illustré, pour chacune des zones de filtration, les points centripètes (c'est-à-dire le plus proche du centre **A**) de chaque canal d'une même couronne de filtration sont situés sur un cercle dont le centre est le centre du support, ce cercle correspondant à l'enveloppe interne de la couronne de filtration concernée. De même, pour chacune des zones de filtration, les points centrifuges (c'est-à-dire le plus proche de la périphérie **1₁** du support) de chaque canal d'une même couronne de filtration sont situés sur un cercle dont le centre est le centre du support, ce cercle correspondant à l'enveloppe externe de la couronne de filtration concernée. Aussi, l'enveloppe externe et l'enveloppe interne délimitant chaque zone poreuse sont deux cercles concentriques et chaque zone poreuse est donc d'épaisseur constante. La distance (correspondant à l'épaisseur **e_{z0}** de la zone poreuse **Z₀)** séparant le canal central **C₀₁** de la couronne de filtration voisine, à savoir la couronne de filtration **F₁**, est moins importante que la distance (correspondant à l'épaisseur **e_{z4}** de la zone poreuse **Z₄**) séparant la dernière couronne de filtration **F₅** de la couronne de filtration voisine en direction du centre du support, à savoir la quatrième couronne de filtration **F₄.** Cette augmentation de l'épaisseur d'au moins certaines des zones poreuses lorsqu'on s'éloigne de l'axe central du support est réalisée, pour minimiser l'effet de la pression exercée par le retentat, ou par les accidents hydrauliques engendrés par le fonctionnement de l'installation tel que les coups de bélier. Pour cela, dans l'exemple illustré, à partir de la troisième zone poreuse **Z₂,** si l'on considère deux zones poreuses successives, le rapport entre l'épaisseur moyenne de la zone poreuse la plus extérieure sur l'épaisseur moyenne de la zone poreuse la plus proche, lorsque l'on se déplace vers le centre du support, est toujours supérieur à 1. Dans l'exemple illustré **Figure 3A****,** les zones poreuses **Z₀**, **Z₁** et **Z₂** présentent une épaisseur identique. A partir de la zone poreuse **Z₂,** l'épaisseur moyenne des zones de filtration augmente lorsque l'on se déplace vers la périphérie **1₁** du support. Les rapports d'épaisseur **e_{z3}/e_{z2}** et **e_{z4}/e_{z3}** sont compris entre 1,14 et 1,17.

De manière à encore renforcer la résistance mécanique de l'élément de filtration, il est possible de prévoir, comme dans l'exemple illustré sur la **Figure 3A****,** que la zone périphérique **Zp** séparant la dernière couronne de filtration **F₅** de la surface externe **1₁** du support **1** soit également plus importante que l'épaisseur moyenne de la zone poreuse **Z₄.** Néanmoins, selon une variante non préférée, il pourrait être prévu que cette zone poreuse périphérique **Zp** présente une épaisseur identique à l'épaisseur de la zone poreuse **Z₄.** Dans l'exemple illustré **Figure 3A****,** l'épaisseur moyenne de la zone périphérique **Zp** correspond à environ 1,13 * l'épaisseur moyenne de la zone poreuse **Z₄.**

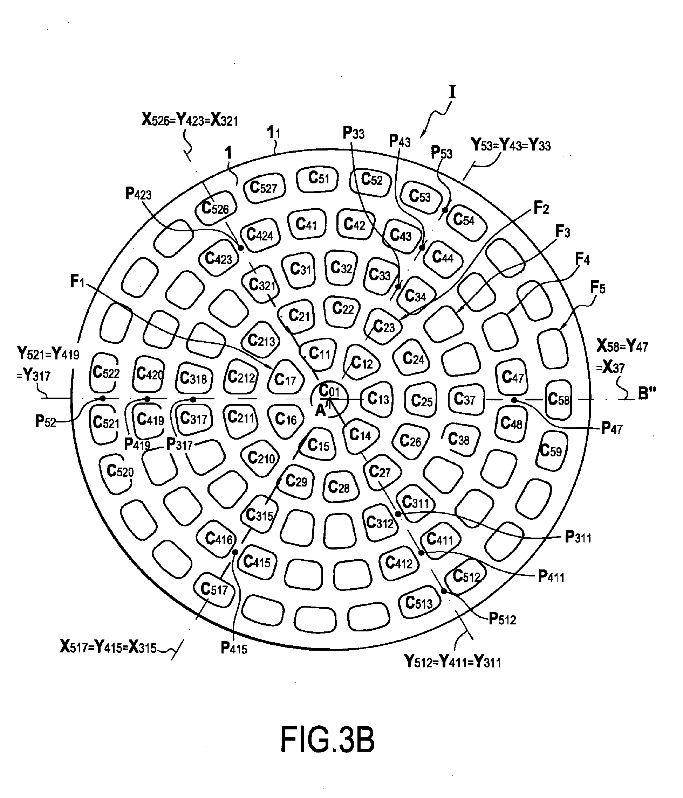

La **Figure 3B** est en tout point identique à la **Figure 3A****,** seule une rotation d'un angle de 7,5° par rapport à l'axe longitudinal A a été appliquée, à la couronne de rang **4.** La **Figure 3B** illustre un autre mode de mise en oeuvre de l'invention dans lequel, il y a alignement entre au moins un axe **X** d'un canal de la couronne de rang **5,** un axe **Y** d'un couloir de passage et de liaison adjacent de la couronne de rang inférieur **4** et l'axe d'un canal **X** adjacent de la couronne de rang inférieur **3.** En effet, dans l'exemple illustré, il y a strict alignement :
- entre l'axe **X₅₂₆** du canal **C₅₂₆** de la couronne de rang 5 **F₅** la plus proche de la périphérie **1₁** du support **1,** l'axe **Y₄₂₃** couloir **P₄₂₃** de passage et de liaison adjacent de la couronne **F₄** de rang inférieur **4,** et l'axe **X₃₂₁** du canal **C₃₂₁** de la couronne **F₃** de rang inférieur **3,** et
- entre l'axe **X₅₈** du canal **C₅₈** de la couronne **F₅** de rang **5**, l'axe **Y₄₇** couloir **P₄₇** de passage et de liaison adjacent de la couronne **F₄** de rang inférieur **4,** et l'axe **X₃₇** du canal **C₃₇** de la couronne **F₃** de rang inférieur **3,** et
- entre l'axe **X₅₁₇** du canal **C₅₁₇** de la couronne **F₅** de rang **5,** l'axe **Y₄₁₅** couloir **P₄₁₅** de passage et de liaison adjacent de la couronne **F₄** de rang inférieur **4,** et l'axe **X₃₁₄** du canal **C₃₁₄** de la couronne **F₃** de rang inférieur **3.**

Dans l'exemple illustré, il y a également alignement entre les axes **Y** adjacents de différents couloir **P** de passage et de liaison des couronnes **3, 4** et 5 : au niveau des couloirs **P₃₁₇, P₄₁₉** et **P₅₂₁** les axes **Y₃₁₇, Y₄₁₉** et **Y₅₂₁** sont alignés. Il y a également alignement des axes **Y₅₃**, **Y₄₃, Y₃₃** au niveau des couloirs **P₅₃, P₄₃** et **P₃₃,** ainsi que des axes **Y₅₁₂, Y₄₁₁** et **Y₃₁₁** au niveau des couloirs **P₅₁₂, P₄₁₁** et **P₃₁₁.**
La section droite transversale du support **1** présente également un axe de symétrie **B".**

Une étude a été réalisée avec le logiciel Abaqus pour évaluer les champs de contrainte existant au sein du support, lorsqu'une sollicitation correspondant à une pression de 100 MPa est imposée dans chacun des canaux. La contrainte maximale calculée pour la **Figure 3A** est de 56,1 MPa, et de 56,2 MPa pour la **Figure 3B****.**

Dans le cadre de l'invention, comme illustré sur les Figures **1A****,** **2**, **3A** et **3B****,** les zones de filtration peuvent correspondre exclusivement à un canal central unique **C₀₁** et à des couronnes de canaux telles que définies dans le cadre de l'invention et réparties de manière concentrique par rapport à l'axe central du support. Néanmoins, différentes variations peuvent être apportées. Notamment, le canal central unique peut être supprimé ou remplacé par un ensemble de canaux disposés comme des pétales à partir de l'axe central **A** du support **1.** Ou bien, lorsque le support comporte plus de trois couronnes de filtration, il peut être prévu que les trois couronnes les plus proches de la périphérie du support soient non enchevêtrées, alors que les autres plus proches du centre du support soient enchevêtrées. Il peut également être prévu que toutes les couronnes présentes soient non enchevêtrées, comme sur les exemples illustrés.

De façon avantageuse, il sera prévu, et ce pour tous les canaux, y compris le canal central que, quels que soient les deux canaux pris deux à deux, le rapport entre leur diamètre hydraulique appartienne à l'intervalle 0,75 - 1,25, voire à l'intervalle 0,95-1,05 et/ou le rapport entre les surfaces de leur section droite transversale appartienne à l'intervalle 0,75 - 1,25, voire à l'intervalle 0,95-1,05.

De même, dans le cadre de l'invention, comme illustré sur les Figures **1A****,** **2****,** **3A** et **3B****,** les canaux des différentes couronnes sont avantageusement disposés à intervalles réguliers et identiques sur leur couronne respective, mais d'autres configurations pourraient également être prévues. Par ailleurs, on notera, que lorsque tous les canaux sont identiques au sein d'une même couronne, ce qui est le cas sur les Figures **1A****,** **2****,** **3A** et **3B****,** ils sont tous positionnés de manière identique sur la couronne, compte tenu des exigences en termes de symétrie des canaux et des couloirs de passage et de liaison.

Selon une autre caractéristique illustrée sur les différents exemples de mise en oeuvre de l'invention, les cloisons de passage **P** ont, de préférence, au sein d'une même couronne, des épaisseurs sensiblement identiques. Selon un mode de réalisation, notamment illustré sur les Figures **1A****,** **2****,** **3A** et **3B****,** il est prévu que la largeur des couloirs de passage **P** aménagés entre deux canaux voisins d'une couronne soit constant sur toute leur longueur. Cette largeur est également identique d'une couronne de filtration à l'autre. En effet, la demanderesse a constaté que les variations de largeur des couloirs d'acheminement du perméat, telles que décrites dans les demandes de brevet WO 93 07959 au nom de CERASIV et EP 0780148 au nom de CORNING, font apparaître nécessairement des points de faible largeur qui constituent systématiquement des points de faiblesse en regard des contraintes mécaniques subies par l'élément de filtration. La mise en oeuvre de couloirs d'acheminement du perméat vers la périphérie de largeur constante permet d'optimiser les caractéristiques mécaniques de l'élément de filtration. En effet, si l'on compare un couloir d'acheminement de largeur constante et un couloir d'acheminement dont la largeur augmente du centre vers la périphérie du support, tout en maintenant constante la section et le nombre des canaux qui définissent ces couloirs, la plus faible largeur du couloir à largeur variable est inférieure à la largeur du couloir à largeur constante et ce point de largeur plus faible devient ainsi un point de faiblesse mécanique. Le choix de couloir de passage d'épaisseur constante permet également d'obtenir un meilleur rendement de fabrication, car les pressions d'extrusion sont plus homogènes.

La largeur d'un couloir de passage peut être définie de la façon suivante : au sein de chaque couronne, les canaux sont de sections droites non circulaires. Dans les exemples illustrés, les canaux des couronnes sont de forme trapézoïdale. Ils possèdent une paroi faisant face à la périphérie **1₁** du support (dite paroi externe), une paroi faisant face au centre **A** du support (dite paroi interne), et deux parois latérales reliant la paroi interne et la paroi externe. Le plus souvent, les parois latérales sont reliées aux parois interne et externe par des congés de raccordement. Dans certains cas, la paroi interne pourra être remplacée par un congé de raccordement reliant les deux parois latérales **R.** Une paroi radiale est constituée par un segment de droite relié par des congés de raccordement aux parois interne et externe du canal qu'elle délimite. La largeur d'un couloir de passage s'entend de la largeur du couloir sur la partie correspondant à ces segments de droites qui est située entre les congés de raccordement.

## Revendications

1. Elément de filtration (**I**) pour la filtration d'un milieu fluide comportant un support (**1**) poreux rigide de forme cylindrique présentant un axe central longitudinal (**A**) et comprenant une pluralité de canaux (**C₀₁**, **C₁₁**, **C₁₂**... **C₂₁**, **C₂₂** ...**Cₙ₁**, **Cₙ₂**...) pour la circulation du milieu fluide à filtrer en vue de récupérer un filtrat à la périphérie (**1₁**) du support (**1**), ménagés dans le support (1) parallèlement à son axe central (**A**), lesdits canaux (**C₀₁**, **C₁₁**, **C₁₂**... **C₂₁**, **C₂₂**... **Cₙ₁**, **Cₙ₂**...) définissant, notamment, des couronnes de filtration (**F₁**, **F₂** ...**Fₙ**), chaque couronne constituant une zone de filtration définie comme un ensemble de canaux identiques situés sur un cercle, les couronnes de filtration étant réparties sur des cercles concentriques, au moins au nombre de trois, dans chacune desquelles :
- les canaux (**C₁₁**, **C₁₂**... **C₂₁**, **C₂₂** ...**Cₙ₁**, **Cₙ₂**...) sont de section droite transversale non circulaire, la section droite transversale de chaque canal présentant un axe de symétrie (**X, X₁**... **Xₙ**, **X₁₁**, ... **X₂₁**..., **Xₙ₁**...) qui passe par le centre du support,
- deux canaux voisins sont séparés par des couloirs (**P**, **P₁**, **P₂** ...**Pₙ**, **P₁₁**, ... **P₂₁**..., **Pₙ₁**...) de passage et de liaison, lesdits couloirs (**P**, **P₁**, **P₂** ...**Pₙ**, **P₁₁**, ... **P₂₁**..., **Pₙ₁**...) de passage et de liaison présentant un axe de symétrie (**Y**, **Y₁**, **Y₂ ...Yₙ**, **Y₁₁**, ... **Y₂₁**..., **Yₙ₁**...) qui passe par le centre du support,
- les rapports entre les diamètres hydrauliques de deux canaux quelconques (**C₁₁**, **C₁₂**... **C₂₁**, **C₂₂** ...**Cₙ₁**, **Cₙ₂**...) des couronnes de filtration appartiennent tous à l'intervalle 0,75 - 1,25, de préférence à l'intervalle 0,95-1,05,
lesdites couronnes de filtration **(F₁**, F**₂** ...**Fₙ**) étant réparties de manière concentrique et séparée les unes des autres par une zone poreuse continue (**F₁**, F**₂** ...**Fₙ₋₁**), sans enchevêtrement entre deux couronnes adjacentes, et au niveau des trois couronnes les plus proches de la périphérie du support nommées couronnes de rang **n, n**-**1** et **n-2,** il existe au moins un sensible alignement de 3 axes adjacents, situés du même côté par rapport au centre du support, pris parmi les axes (**Y, Y₁, Y₂** ...**Yₙ**, **Y₁₁**, ... **Y₂₁**..., **Yₙ₁**...) des couloirs de passage et de liaison et les axes (**X**, **X**₁... **Xₙ**, **X₁₁**, ... **X₂₁**..., **Xₙ₁**...) des canaux, qui favorise la résistance mécanique du support, étant entendu que lorsque l'élément de filtration présente plus de trois couronnes de filtration, il existe au moins une couronne parmi les trois couronnes les plus proches de la périphérie du support nommées couronnes de rang n, n-1 et n-2 dont le nombre de canaux n'est pas un multiple du nombre de canaux de la couronne la plus proche du centre du support, nommée couronne de rang 1.

2. Elément de filtration (I) selon la revendication 1 **caractérisé en ce que** le sensible alignement entre les axes des couloirs de passage et de liaison et les axes des canaux qui favorise la résistance mécanique du support correspond au fait qu'au moins un axe **(Yₙ)** d'un couloir (**Pₙ**) de passage et de liaison de la couronne (**Fₙ**) la plus proche de la périphérie (**1₁**) du support (1) nommée couronne de rang n, est sensiblement aligné avec l'axe (**Xₙ₋₁**) d'un canal adjacent de la couronne (**Fₙ₋₁**) de rang inférieur n-1, ledit axe (**Xₙ₋₁**) du canal étant lui-même sensiblement aligné avec l'axe (**Yₙ₋₂**) d'un couloir (**Pₙ₋₂**) de passage et de liaison adjacent de la couronne (**Fₙ₋₂**) de rang inférieur n-2.

3. Elément de filtration **(I)** selon la revendication 2 **caractérisé en ce que** d'une part, l'axe **(Yₙ)** d'un couloir (**Pₙ**) de passage et de liaison de la couronne (**Fₙ**) la plus proche de la périphérie (**1₁**) du support **(1)** nommée couronne de rang **n,** est aligné avec l'axe (**Xₙ₋₁**) d'un canal adjacent de la couronne (**Fₙ₋₁**) de rang inférieur **n**-**1**, avec une tolérance de +/- 16 % et, de préférence, de +/- 10 %, et préférentiellement de +/- 5 %, de la valeur du secteur angulaire défini par les deux axes de symétrie des couloirs de passage et de liaison délimitant ledit canal de la couronne de rang **n-1** et d'autre part, ledit axe (**Xₙ₋₁**) du canal est lui-même sensiblement aligné avec l'axe (**Yₙ₋₂**) d'un couloir (**Pₙ₋₂**) de passage et de liaison adjacent de la couronne (**Fₙ₋₂**) de rang inférieur **n-2,** avec une tolérance de +/- 16 % et, de préférence, de +/- 10 %, et préférentiellement de +/- 5 %, de la valeur du secteur angulaire défini par les deux axes de symétrie des couloirs de passage et de liaison délimitant ledit canal de la couronne de rang n-1.

4. Elément de filtration (**I**) selon la revendication 2 ou 3 **caractérisé en ce qu'**il comporte au moins quatre couronnes de filtration (**F₁**, **F₂, F₃**, ...**Fₙ**) et **en ce que** pour au moins un axe **(Yₙ)** d'un couloir (**Pₙ**) de passage et de liaison de la couronne (**Fₙ**) de rang n, qui est sensiblement aligné avec l'axe (**Xₙ₋₁**) d'un canal adjacent de la couronne (**Fₙ₋₁**) de rang inférieur n-1, avec ledit axe du canal lui-même sensiblement aligné avec l'axe (**Yₙ₋₂**) d'un couloir (**Pₙ₋₂**) de passage et de liaison adjacent de la couronne (**Fₙ₋₂**) de rang inférieur n-2, il y a également sensiblement alignement entre ledit axe (**Yₙ₋₂**) du couloir (**Pₙ₋₂**) de passage et de liaison de la couronne (**Fₙ₋₂**) de rang n-2 et l'axe (**Yₙ₋₃**) du couloir adjacent (**Pₙ₋₃**) de passage et de liaison de la couronne (**Fₙ-₃**) de rang **n-3.**

5. Elément de filtration (**I**) selon la revendication 1 **caractérisé en ce que** le sensible alignement entre les axes des couloirs de passage et de liaison et les axes des canaux qui favorise la résistance mécanique du support correspond au fait qu'au moins un axe (**Xₙ**) d'un canal de la couronne (**Fₙ**) la plus proche de la périphérie (**1₁**) du support **(1)** nommée couronne de rang **n,** est sensiblement aligné avec l'axe (**Yₙ₋₁**) d'un couloir adjacent (**Pₙ₋₁**) de passage et de liaison de la de la couronne (**Fₙ₋₁**) de rang inférieur **n**-**1**, ledit axe (**Yₙ₋₁**) du couloir de passage et de liaison étant lui-même sensiblement aligné avec l'axe (**Xₙ₋₂**) d'un canal adjacent de la couronne (**Fₙ₋₂**) de rang inférieur **n-2.**

6. Elément de filtration (**I**) selon la revendication 5 **caractérisé en ce que** d'une part, l'axe (**Xₙ**) d'un canal de la couronne (**Fₙ**) la plus proche de la périphérie (**1₁**) du support **(1)** nommée couronne de rang **n,** est aligné avec l'axe (**Yₙ₋₁**) d'un couloir adjacent de passage et de liaison de la couronne (**Fₙ₋₁**) de rang inférieur **n-1,** avec une tolérance de +/- 16 % et, de préférence, de +/- 10 %, et préférentiellement de +/- 5 %, de la valeur du secteur angulaire défini par les deux axes de symétrie des couloirs de passage et de liaison délimitant ledit canal de la couronne de rang **n** et d'autre part, ledit axe (**Yₙ₋₁**) du couloir de passage et de liaison est lui-même sensiblement aligné avec l'axe (**Xₙ₋₂**) d'un canal adjacent de la couronne (**Fₙ₋₂**) de rang inférieur **n-2,** avec une tolérance de +/- 16 % et, de préférence, de +/- 10 %, et préférentiellement de +/- 5 %, de la valeur du secteur angulaire défini par les deux axes de symétrie des couloirs de passage et de liaison délimitant ledit canal de la couronne de rang **n**-**2**.

7. Elément de filtration (**I**) selon l'une des revendications précédentes **caractérisé en ce qu'**au moins un axe **(Yₙ)** d'un couloir (**Pₙ**) de passage et de liaison de la couronne (**Fₙ**) la plus proche de la périphérie du support nommée couronne de rang n, est sensiblement aligné avec l'axe (**Yₙ₋₁**) d'un couloir (**Pₙ₋₁**) de passage et de liaison adjacent de la couronne (**Fₙ₋₁**) de rang inférieur **n-1,** ledit axe (**Yₙ₋₁**) du couloir (**Pₙ₋₁**) de passage et de liaison étant lui-même sensiblement aligné avec l'axe (**Yₙ₋₂**) d'un couloir (**Pₙ₋₂**) de passage et de liaison adjacent de la couronne (**Fₙ₋₂**) de rang inférieur **n-2.**

8. Elément de filtration **(I)** selon la revendication 7 **caractérisé en ce que** d'une part, l'axe **(Yₙ)** d'un couloir (**Pₙ**) de passage et de liaison de la couronne (**Fₙ**) la plus proche de la périphérie (**1₁**) du support **(1)** nommée couronne de rang **n,** est aligné avec l'axe (**Yₙ₋₁**) d'un couloir adjacent (**Pₙ₋₁**) de passage et de liaison de la couronne (**Fₙ₋₁**) de rang inférieur **n**-**1**, avec une tolérance de +/- 3° et, de préférence, de +/- 2°, et préférentiellement de +/- 1°, et d'autre part, ledit axe (**Yₙ₋₁**) du couloir (**Pₙ₋₁**) de passage et de liaison est lui-même sensiblement aligné avec l'axe (**Yₙ₋₂**) d'un couloir (**Pₙ₋₂**) de passage et de liaison adjacent de la couronne (**Fₙ₋₂**) de rang inférieur **n-2,** avec une tolérance de +/- 3° et, de préférence, de +/- 2°, et préférentiellement de +/- 1°.

9. Elément de filtration **(I)** selon l'une des revendications précédentes **caractérisé en ce qu'**au moins un axe (**Xₙ**) d'un canal de la couronne (**Fₙ**) la plus proche de la périphérie du support nommée couronne de rang n, est sensiblement aligné avec l'axe (**Xₙ₋₁**) d'un canal adjacent de la couronne (**Fₙ₋₁**) de rang inférieur **n**-**1**, ledit axe (**Xₙ₋₂**) du canal étant lui-même sensiblement aligné avec l'axe d'un canal (**Xₙ₋₂**) adjacent de la couronne (**Fₙ₋₂**) de rang inférieur **n-2.**

10. Elément de filtration (**I**) selon la revendication 9 **caractérisé en ce que** d'une part un axe (**Xₙ**) d'un canal de la couronne (**Fₙ**) la plus proche de la périphérie (**1₁**) du support nommée couronne de rang **n,** est aligné avec l'axe d'un canal adjacent (**Xₙ₋₁**) de la couronne (**Fₙ₋₁**) de rang inférieur n-1, avec une tolérance de +/- 16 % et, de préférence, de +/- 10 %, et préférentiellement de +/- 5 %, de la valeur du secteur angulaire défini par les deux axes de symétrie des couloirs de passage et de liaison délimitant ledit canal (**Xₙ₋₁**) de la couronne de rang **n**-**1**, ledit axe (**Xₙ₋₁**) du canal de la couronne (**Fₙ₋₁**) de rang inférieur **n-1** étant lui-même sensiblement aligné avec l'axe (**Xₙ₋₂**) d'un canal adjacent de la couronne (**Fₙ₋₂**) de rang inférieur **n-2,** avec une tolérance de +/- 16 % et, de préférence, de +/- 10 %, et préférentiellement de +/- 5 %, de la valeur du secteur angulaire défini par les deux axes de symétrie des couloirs de passage et de liaison délimitant ledit canal (**Xₙ₋₁**) de la couronne de rang **n-1.**

11. Elément de filtration **(I)** selon l'une des revendications précédentes **caractérisé en ce que** le nombre de canaux par couronne est croissant des couronnes de rang **n-2** à **n.**

12. Elément de filtration **(I)** selon l'une des revendications précédentes **caractérisé en ce que** dans chacune des couronnes de rang **n-2** à **n** tous les canaux sont identiques.

13. Elément de filtration (**I**) selon l'une des revendications précédentes **caractérisé en ce que** tous les rapports entre les surfaces de section droite transversale de canaux quelconques appartenant aux couronnes de filtration appartiennent tous à l'intervalle 0,75 - 1,25, de préférence à l'intervalle 0,95-1,05.

14. Elément de filtration (**I**) selon l'une des revendications précédentes **caractérisé en ce que** les largeurs les cloisons de passage sont égales au sein d'une même couronne et égales d'une couronne à l'autre.

15. Elément de filtration (**I**) selon l'une des revendications précédentes **caractérisé en ce que** la largeur de chaque cloison de passage est constante sur toute sa longueur.

16. Elément de filtration (**I**) selon l'une des revendications précédentes **caractérisé en ce que** tous les canaux des couronnes de filtration (**F₁**, **F₂** ...**Fₙ**) sont délimités par une paroi externe, deux parois latérales et des congés de raccordement et éventuellement une paroi interne, lesdits congés de raccordement présentant chacun un profil en arc de cercle dont le rayon est de préférence supérieur ou égale à 0,3 mm, et appartient préférentiellement à la gamme allant de 0,3 à 1,5 mm.

17. Elément de filtration (**I**) selon l'une des revendications précédentes **caractérisé en ce que** les couronnes (**Fₙ**, **Fₙ-₁, Fₙ-₂**) de rang **n, n-1** et **n-2** présentent chacune un nombre de canaux multiple d'un nombre entier m et **en ce que** le nombre d'axes **(Yₙ)** d'un couloir (**Pₙ**) de passage et de liaison de la couronne (**Fₙ**) de rang n, qui sont sensiblement alignés avec l'axe (**Xₙ₋₁**) d'un canal adjacent de la couronne (**Fₙ₋₁**) de rang inférieur **n-1,** avec ledit axe du canal lui-même sensiblement aligné avec l'axe (**Yₙ₋₂**)d'un couloir (**P**_{**n**-**2**}) de passage et de liaison adjacent de la couronne (**Fₙ₋₂**) de rang inférieur **n-2** correspond à ce nombre entier **m.**

18. Elément de filtration (**I**) selon l'une des revendications précédentes **caractérisé en ce que** les canaux (**Cₙ₁**, **Cₙ₂**...) d'une même couronne de filtration sont tous identiques et espacés à égale distance les uns des autres.

19. Elément de filtration **(I)** selon l'une des revendications précédentes **caractérisé en ce qu'**il comporte un canal central (**C₀₁**), de préférence de forme circulaire, et **en ce que** les couronnes de filtration sont réparties de manière concentrique par rapport au canal central (**C₀₁**).

20. Elément de filtration (**I**) selon l'une des revendications précédentes **caractérisé en ce que** tous les canaux (**C₁₁**, **C₁₂... C₂₁, C₂₂** ... **Cₙ₁**, **Cₙ₂**...) des couronnes de filtration (**F₁**, **F₂** ...**Fₙ**) sont de section trapézoïdale ou triangulaire.

21. Elément de filtration (**I**) selon l'une des revendications précédentes **caractérisé en ce que** le support présente une section circulaire ou polygonale.

22. Elément de filtration (**I**) selon l'une des revendications précédentes **caractérisé en ce que** la surface de tous les canaux (**C₀₁**, **C₁₁**, **C₁₂... C₂₁, C₂₂** ... **Cₙ₁, Cₙ₂**...) est recouverte par au moins une couche inorganique de filtration.

23. Elément de filtration (**I**) selon l'une des revendications précédentes **caractérisé en ce que** l'épaisseur moyenne de la zone poreuse (Z₀) la plus proche de l'axe central est inférieure à l'épaisseur moyenne de la zone poreuse la plus proche de la périphérie **(Zₙ₋₁)** du support et lorsque l'on se déplace de l'axe central **(A)** du support vers sa périphérie, l'épaisseur moyenne d'une zone poreuse est soit identique à la suivante, soit inférieure.

24. Installation ou module de filtration comportant un élément de filtration (**I**) selon l'une des revendications précédentes dans un carter.

## Patentansprüche

1. Filterelement (I) für die Filtration eines flüssigen Mediums, umfassend einen starren porösen Träger (1) zylindrischer Form, der eine mittlere Längsachse (A) aufweist und eine Vielzahl von Kanälen (C₀₁, C₁₁, C₁₂... C₂₁, C₂₂ ...Cₙ₁, Cₙ₂...) für die Zirkulation des zu filternden flüssigen Mediums zur Gewinnung eines Filtrats am Umfang (1₁) des Trägers (1) umfasst, die in dem Träger (1) parallel zu seiner mittleren Achse (A) ausgebildet sind, wobei die Kanäle (C₀₁, C₁₁, C₁₂... C₂₁, C₂₂... Cₙ₁, Cₙ₂...) insbesondere Filtrationskränze (F₁, F₂ ...Fₙ) definieren, wobei jeder Kranz einen Filtrationsbereich bildet, der als eine Anordnung von auf einem Kreis gelegenen identischen Kanälen definiert ist, wobei die Filtrationskränze auf konzentrischen Kreisen, wenigstens drei an der Zahl, verteilt sind, bei jedem von ihnen:
- weisen die Kanäle (C₁₁, C₁₂... C₂₁, C₂₂ ...Cₙ₁, Cₙ₂...) einen nicht kreisförmigen Querschnitt auf, wobei der Querschnitt eines jeden Kanals eine Symmetrieachse (X, X₁... Xₙ, X₁₁, ... X₂₁..., Xₙ₁...) aufweist, die durch den Mittelpunkt des Trägers verläuft,
- sind zwei benachbarte Kanäle durch Durchgangs- und Verbindungsgänge (P, P₁, P₂ ...Pₙ, P₁₁, ... P₂₁..., Pₙ₁...) getrennt, wobei die Durchgangs- und Verbindungsgänge (P, P₁, P₂ ...Pₙ, P₁₁, ... P₂₁..., Pₙ₁...) eine Symmetrieachse (Y, Y₁, Y₂ ... Yₙ, Y₁₁, ... Y₂₁..., Yₙ₁...) aufweisen, die durch den Mittelpunkt des Trägers verläuft,
- wobei die Verhältnisse zwischen den hydraulischen Durchmessern von zwei beliebigen Kanälen (C₁₁, C₁₂... C₂₁, C₂₂ ...Cₙ₁, Cₙ₂...) der Filtrationskränze alle zu dem Bereich 0,75 - 1,25, vorzugsweise zu dem Bereich 0,95 - 1,05 gehören,
wobei die Filtrationskränze (F₁, F₂ ...Fₙ) konzentrisch und durch einen durchgehenden porösen Bereich (F₁, F₂ **...** Fₙ₋₁) voneinander getrennt, ohne Verschachtelung zwischen zwei benachbarten Kränzen, verteilt sind, und im Bereich der drei Kränze, die dem Umfang des Trägers am nächsten gelegen sind, welche als Kränze der Reihe n, n-1 und n-2 bezeichnet werden, wenigstens eine deutliche Ausrichtung von drei benachbarten, bezogen auf den Mittelpunkt des Trägers auf der gleichen Seite gelegenen Achsen, welche aus den Achsen (Y, Y₁, Y₂ ... Yₙ, Y₁₁, ... V₂₁..., Yₙ₁...) der Durchgangs- und Verbindungsgänge und den Achsen (X, X₁ .... Xₙ, X₁₁, ... X₂₁..., Xₙ₁...) der Kanäle ausgewählt sind, besteht, die die mechanische Festigkeit des Trägers begünstigt, mit der Maßgabe, dass, wenn das Filterelement mehr als drei Filtrationskränze aufweist, wenigstens ein Kranz unter den drei dem Umfang des Trägers am nächsten gelegenen Kränzen, welche als Kränze der Reihe n, n-1 und n-2 bezeichnet werden, vorhanden ist, dessen Kanalanzahl kein Vielfaches der Kanalanzahl des dem Mittelpunkt des Trägers am nächsten gelegenen Kranzes, welcher als Kranz der Reihe 1 bezeichnet wird, ist.

2. Filterelement (I) nach Anspruch 1, **dadurch gekennzeichnet, dass** die deutliche Ausrichtung zwischen den Achsen der Durchgangs- und Verbindungsgänge und den Achsen der Kanäle, welche die mechanische Festigkeit des Trägers begünstigt, der Tatsache entspricht, dass wenigstens eine Achse (Yₙ) eines Durchgangs- und Verbindungsgangs (Pₙ) des dem Umfang (1₁) des Trägers (1) am nächsten gelegenen Kranzes (Fₙ), welcher als Kranz der Reihe n bezeichnet wird, im Wesentlichen mit der Achse (Xₙ₋₁) eines benachbarten Kanals des Kranzes (Fₙ₋₁) der niedrigeren Reihe n-1 fluchtet, wobei die Achse (Xₙ₋₁) des Kanals selbst im Wesentlichen mit der Achse (Yₙ₋₂) eines benachbarten Durchgangs- und Verbindungsgangs (Pₙ₋₂) des Kranzes (Fₙ₋₂) der niedrigeren Reihe n-2 fluchtet.

3. Filterelement (I) nach Anspruch 2, **dadurch gekennzeichnet, dass** einerseits die Achse (Yₙ) eines Durchgangs- und Verbindungsgangs (Pₙ) des dem Umfang (1₁) des Trägers (1) am nächsten gelegenen Kranzes (Fₙ), welcher als Kranz der Reihe n bezeichnet wird, mit der Achse (Xₙ₋₁) eines benachbarten Kanals des Kranzes (Fₙ₋₁) der niedrigeren Reihe n-1 fluchtet, mit einer Toleranz von +/- 16 % und vorzugsweise von +/- 10 %, und bevorzugt von +/- 5 %, des Wertes des Winkelsektors, der durch die beiden Symmetrieachsen der Durchgangs- und Verbindungsgänge, welche den Kanal des Kranzes der Reihe n-1 begrenzen, definiert ist, wobei die Achse (Xₙ₋₁) des Kanals selbst im Wesentlichen mit der Achse (Yₙ₋₂) eines benachbarten Durchgangs- und Verbindungsgangs (Pₙ₋₂) des Kranzes (Fₙ₋₂) der niedrigeren Reihe n-2 fluchtet, mit einer Toleranz von +/- 16 % und vorzugsweise von +/- 10 % und bevorzugt von +/-5 %, des Wertes des Winkelsektors, der durch die beiden Symmetrieachsen der Durchgangs- und Verbindungsgänge, welche den Kanal des Kranzes der Reihe n-1 begrenzen, definiert ist.

4. Filterelement (I) nach Anspruch 2 oder 3, **dadurch gekennzeichnet, dass** es wenigstens vier Filtrationskränze (F₁, F₂, F₃, ...Fₙ) umfasst und dass bei wenigstens einer Achse (Yₙ) eines Durchgangs- und Verbindungsgangs (Pₙ) des Kranzes (Fₙ) der Reihe n, die im Wesentlichen mit der Achse (Xₙ₋₁) eines benachbarten Kanals des Kranzes (Fₙ₋₁) der niedrigeren Reihe n-1 fluchtet, wobei die Achse des Kanals selbst im Wesentlichen mit der Achse (Yₙ₋₂) eines benachbarten Durchgangs- und Verbindungsgangs (Pₙ₋₂) des Kranzes (Fₙ₋₂) der niedrigeren Reihe n-2 fluchtet, auch im Wesentlichen eine Ausrichtung zwischen der Achse (Yₙ₋₂) des Durchgangs- und Verbindungsgangs (Pₙ₋₂) des Kranzes (Fₙ₋₂) der Reihe n-2 und der Achse (Yₙ₋₃) des benachbarten Durchgangs- und Verbindungsgangs (Pₙ₋₃) des Kranzes (Fₙ₋₃) der Reihe n-3 besteht.

5. Filterelement (I) nach Anspruch 1, **dadurch gekennzeichnet, dass** die deutliche Ausrichtung zwischen den Achsen der Durchgangs- und Verbindungsgänge und den Achsen der Kanäle, welche die mechanische Festigkeit des Trägers begünstigt, der Tatsache entspricht, dass wenigstens eine Achse (Xₙ) eines Kanals des dem Umfang (1₁) des Trägers (1) am nächsten gelegenen Kranzes (Fₙ), welcher als Kranz der Reihe n bezeichnet wird, im Wesentlichen mit der Achse (Xₙ₋₁) eines benachbarten Durchgangs- und Verbindungsgangs (Pₙ₋₁) des Kranzes (Fₙ₋₁) der niedrigeren Reihe n-1 fluchtet, wobei die Achse (Yₙ₋₁) des Durchgangs- und Verbindungsgangs selbst im Wesentlichen mit der Achse (Xₙ₋₂) eines benachbarten Kanals des Kranzes (Fₙ₋₂) der niedrigeren Reihe n-2 fluchtet.

6. Filterelement (I) nach Anspruch 5, **dadurch gekennzeichnet, dass** einerseits die Achse (Xₙ) eines Kanals des dem Umfang (1₁) des Trägers (1) am nächsten gelegenen Kranzes (Fₙ), welcher als Kranz der Reihe n bezeichnet wird, mit der Achse (Xₙ₋₁) eines benachbarten Durchgangs- und Verbindungsgangs des Kranzes (Fₙ₋₁) der niedrigeren Reihe n-1 fluchtet, mit einer Toleranz von +/- 16 % und vorzugsweise von +/- 10 %, und bevorzugt von +/- 5 %, des Wertes des Winkelsektors, der durch die beiden Symmetrieachsen der Durchgangs- und Verbindungsgänge, welche den Kanal des Kranzes der Reihe n begrenzen, definiert ist, und andererseits die Achse (Yₙ₋₁) des Durchgangs- und Verbindungsgangs selbst im Wesentlichen mit der Achse (Xₙ₋₂) eines benachbarten Kanals des Kranzes (Fₙ₋₂) der niedrigeren Reihe n-2 fluchtet, mit einer Toleranz von +/- 16 % und vorzugsweise von +/- 10 % und bevorzugt von +/-5 %, des Wertes des Winkelsektors, der durch die beiden Symmetrieachsen der Durchgangs- und Verbindungsgänge, welche den Kanal des Kranzes der Reihe n-2 begrenzen, definiert ist.

7. Filterelement (I) nach einem der vorhergehenden Ansprüche, **dadurch gekennzeichnet, dass** wenigstens eine Achse (Yₙ) eins Durchgangs- und Verbindungsgangs (Pₙ) des dem Umfang des Trägers am nächsten gelegenen Kranzes (Fₙ), welcher als Kranz der Reihe n bezeichnet wird, im Wesentlichen mit der Achse (Xₙ₋₁) eines benachbarten Durchgangs- und Verbindungsgangs (Pₙ₋₁) des Kranzes (Fₙ₋₁) der niedrigeren Reihe n-1 fluchtet, wobei die Achse (Xₙ₋₁) des Durchgangs- und Verbindungsgangs (Pₙ₋₁) selbst im Wesentlichen mit der Achse (Yₙ-₂) eines benachbarten Durchgangs- und Verbindungsgangs (Pₙ₋₂) des Kranzes (Fₙ₋₂) der niedrigeren Reihe n-2 fluchtet.

8. Filterelement (I) nach Anspruch 7, **dadurch gekennzeichnet, dass** einerseits die Achse (Yn) eines Durchgangs- und Verbindungsgangs (Pₙ) des dem Umfang (1₁) des Trägers (1) am nächsten gelegenen Kranzes (Fₙ), welcher als Kranz der Reihe n bezeichnet wird, mit der Achse (Yₙ₋₁) eines benachbarten Durchgangs- und Verbindungsgangs (Pₙ₋₁) des Kranzes (Fₙ₋₁) der niedrigeren Reihe n-1 fluchtet, mit einer Toleranz von +/- 3° und vorzugsweise von +/- 2°, und bevorzugt von +/- 1°, und andererseits die Achse (Yₙ₋₁) des Durchgangs- und Verbindungsgangs (Pₙ₋₁) selbst im Wesentlichen mit der Achse (Yₙ₋₂) eines benachbarten Durchgangs- und Verbindungsgangs (Pₙ₋₂) des Kranzes (Fₙ₋₂) der niedrigeren Reihe n-2 fluchtet, mit einer Toleranz von +/- 3° und vorzugsweise von +/- 2° und bevorzugt von +/- 1°.

9. Filterelement (I) nach einem der vorhergehenden Ansprüche, **dadurch gekennzeichnet, dass** wenigstens eine Achse (Xₙ) eines Kanals des dem Umfang des Trägers am nächsten gelegenen Kranzes (Fₙ), welcher als Kranz der Reihe n bezeichnet wird, im Wesentlichen mit der Achse (Xₙ₋₁) eines benachbarten Kanals des Kranzes (Fₙ₋₁) der niedrigeren Reihe n-1 fluchtet, wobei die Achse (Xₙ₋₂) des Kanals selbst im Wesentlichen mit der Achse eines benachbarten Kanals (Xₙ₋₂) des Kranzes (Fₙ₋₂) der niedrigeren Reihe n-2 fluchtet.

10. Filterelement (I) nach Anspruch 9, **dadurch gekennzeichnet, dass** einerseits eine Achse (Xₙ) eines Kanals des dem Umfang (1₁) des Trägers am nächsten gelegenen Kranzes (Fₙ), welcher als Kranz der Reihe n bezeichnet wird, mit der Achse eines benachbarten Kanals (Xₙ₋₁) des Kranzes (Fₙ₋₁) der niedrigeren Reihe n-1 fluchtet, mit einer Toleranz von +/- 16 % und vorzugsweise von +/- 10 %, und bevorzugt von +/- 5 %, des Wertes des Winkelsektors, der durch die beiden Symmetrieachsen der Durchgangs- und Verbindungsgänge, welche den Kanal (Xₙ₋₁) des Kranzes der Reihe n-1 begrenzen, definiert ist, wobei die Achse (Xₙ₋₁) des Kanals des Kranzes (Fₙ₋₁) der niedrigeren Reihe n-1 selbst im Wesentlichen mit der Achse (Xₙ₋₂) eines benachbarten Kanals des Kranzes (Fₙ₋₂) der niedrigeren Reihe n-2 fluchtet, mit einer Toleranz von +/- 16 % und vorzugsweise von +/- 10 % und bevorzugt von +/- 5 %, des Wertes des Winkelsektors, der durch die beiden Symmetrieachsen der Durchgangs- und Verbindungsgänge, welche den Kanal (Xₙ₋₁) des Kranzes der Reihe n-1 begrenzen, definiert ist.

11. Filterelement (I) nach einem der vorhergehenden Ansprüche, **dadurch gekennzeichnet, dass** die Anzahl der Kanäle pro Kranz von den Kränzen der Reihen n-2 bis n zunehmend ist.

12. Filterelement (I) nach einem der vorhergehenden Ansprüche, **dadurch gekennzeichnet, dass** bei jedem der Kränze der Reihe n-2 bis n alle Kanäle identisch sind.

13. Filterelement (I) nach einem der vorhergehenden Ansprüche, **dadurch gekennzeichnet, dass** alle Verhältnisse zwischen den Querschnittsflächen von zu den Filtrationskränzen gehörenden beliebigen Kanälen alle zu dem Bereich 0,75 - 1,25, vorzugsweise zu dem Bereich 0,95 - 1,05 gehören.

14. Filterelement (I) nach einem der vorhergehenden Ansprüche, **dadurch gekennzeichnet, dass** die Breiten der Durchgangstrennwände innerhalb eines gleichen Kranzes gleich sind und von einem Kranz zum nächsten gleich sind.

15. Filterelement (I) nach einem der vorhergehenden Ansprüche, **dadurch gekennzeichnet, dass** die Breite einer jeden Durchgangstrennwand über ihre gesamte Länge konstant ist.

16. Filterelement (I) nach einem der vorhergehenden Ansprüche, **dadurch gekennzeichnet, dass** alle Kanäle der Filtrationskränze (F₁, F₂ ...Fₙ) durch eine Außenwand, zwei Seitenwände und Verbindungskehlen sowie eventuell eine Innenwand begrenzt sind, wobei die Verbindungskehlen jeweils ein kreisbogenförmiges Profil aufweisen, dessen Radius vorzugsweise größer als oder gleich 0,3 mm ist und vorzugsweise zu dem von 0,3 bis 1,5 mm reichenden Bereich gehört.

17. Filterelement (I) nach einem der vorhergehenden Ansprüche, **dadurch gekennzeichnet, dass** die Kränze (Fₙ, Fₙ₋₁, Fₙ₋₂) der Reihe n, n-1 und n-2 jeweils eine Anzahl von Kanälen aufweisen, die ein Vielfaches einer ganzen Zahl m ist, und dass die Anzahl der Achsen (Yₙ) eines Durchgangs- und Verbindungsgangs (**Pₙ**) des Kranzes (Fₙ) der Reihe n, die im Wesentlichen mit der Achse (Xₙ₋₁) eines benachbarten Kanals des Kranzes (Fₙ₋₁) der niedrigeren Reihe n-1 fluchten, wobei die Achse des Kanals selbst im Wesentlichen mit der Achse (Yₙ₋₂) eines benachbarten Durchgangs- und Verbindungsgangs (Pₙ₋₂) des Kranzes (Fₙ₋₂) der niedrigeren Reihe n-2 fluchtet, dieser ganzen Zahl m entspricht.

18. Filterelement (I) nach einem der vorhergehenden Ansprüche, **dadurch gekennzeichnet, dass** die Kanäle (Cₙ₁, Cₙ₂...) eines gleichen Filtrationskranzes alle identisch und in gleichem Abstand voneinander beabstandet sind.

19. Filterelement (I) nach einem der vorhergehenden Ansprüche, **dadurch gekennzeichnet, dass** es einen mittleren Kanal (C₀₁), vorzugsweise kreisförmigen, umfasst und dass die Filtrationskränze zu dem mittleren Kanal (C₀₁) konzentrisch verteilt sind.

20. Filterelement (I) nach einem der vorhergehenden Ansprüche, **dadurch gekennzeichnet, dass** alle Kanäle (C₁₁, C₁₂... C₂₁, C₂₂ Cₙ₁, Cₙ₂...) der Filtrationskränze (F₁, F₂ ...Fₙ) einen trapezförmigen oder dreideckigen Querschnitt aufweisen.

21. Filterelement (I) nach einem der vorhergehenden Ansprüche, **dadurch gekennzeichnet, dass** der Träger einen kreisförmigen oder polygonalen Querschnitt aufweist.

22. Filterelement (I) nach einem der vorhergehenden Ansprüche, **dadurch gekennzeichnet, dass** die Oberfläche aller Kanäle (C₀₁, C₁₁, C₁₂... C₂₁, C₂₂ ...Cₙ₁, Cₙ₂...) mit wenigstens einer anorganischen Filtrationsschicht überzogen ist.

23. Filterelement (I) nach einem der vorhergehenden Ansprüche, **dadurch gekennzeichnet, dass** die mittlere Dicke des der mittleren Achse am nächsten gelegenen porösen Bereichs (Z₀) kleiner ist als die mittlere Dicke des dem Umfang des Trägers am nächsten gelegenen porösen Bereichs (Zₙ₋₁), und wenn man sich von der mittleren Achse (A) des Trägers in Richtung seines Umfangs bewegt, die mittlere Dicke eines porösen Bereichs entweder mit der nächsten identisch oder kleiner ist.

24. Filteranlage oder -modul, die/das ein Filterelement (I) nach einem der vorhergehenden Ansprüche in einem Gehäuse umfasst.

## Claims

1. A filtration element **(I)** for filtering a fluid medium comprising a rigid porous support **(1)** of cylindrical shape having a longitudinal central axis **(A)** and comprising a plurality of channels **(C₀₁, C₁₁, C₁₂... C₂₁, C₂₂** -**Cₙ₁**, **Cₙ₂**...) for the circulation of the fluid medium to be filtered with a view to recovering a filtrate at the periphery (**1₁**) of the support **(1),** which channels are made in the support **(1)** parallel to its central axis **(A),** said channels **(C₀₁, C₁₁, C₁₂... C₂₁, C₂₂**.. Cₙ₁, **Cₙ₂**...) defining, in particular, filtration crowns (**F₁**, **F₂** ...**Fₙ**), each crown constituting a filtration zone defined as a set of identical channels located over a circle, the filtration crowns being distributed over concentric circles, of at least three in number, in each of which crowns :
- the channels **(C₁₁, C₁₂... C₂₁, C₂₂**...**Cₙ₁**, **Cₙ₂**...) have a noncircular transverse cross section, the transverse cross section of each channel having an axis of symmetry (**X**, **X**₁... **Xₙ**, **X₁₁**, ... **X₂₁**..., **Xₙ₁**...) that passes through the center of the support,
- two neighboring channels are separated by flow and connection paths (P, **P₁, P₂ ...Pₙ, P₁₁**, ... **P₂₁**..., **Pₙ₁**...), said flow and connection paths (**P**, **P₁, P₂ ...Pₙ**, **P₁₁**, ... **P₂₁**..., **Pₙ₁...)** having an axis of symmetry **(Y, Y₁, Y₂** ...**Yₙ**, **Y₁₁**, ... **Y₂₁**..., **Yₙ₁...)** that passes through the center of the support,
- the ratios between the hydraulic diameters of any two channels **(C₁₁, C₁₂... C₂₁, C₂₂**...**Cₙ₁**, **Cₙ₂**...) of the filtration crowns are all within the interval 0.75-1.25, preferably within the interval 0.95-1.05,
said filtration crowns **(F₁, F₂** ...**Fₙ**) being distributed concentrically and separated from one another by a continuous porous zone (**F₁**, **F₂** ...**Fₙ₋₁**), without overlap between two adjacent crowns, and at the three crowns closest to the periphery of the support, known as row **n, n-1** and **n-2** crowns, there is at least a substantial alignment of 3 adjacent axes, located on the same side with respect to the center, taken among the axes **(Y, Y₁, Y₂** ...**Yₙ**, **Y₁₁,** ... **Y₂₁**...,**Yₙ₁**...) of the flow and connection paths and the axes (**X**, **X**₁... **Xₙ**, **X₁₁**, ... **X₂₁**..., **Xₙ₁**...) of the channels, which favors the mechanical strength of the support, it being understood that when the filtration element has more than three filtration crowns, there is at least one crown among the three crowns closest to the periphery of the support, known as row **n, n-1** and **n-2** crowns, the number of channels of which is not a multiple of the number of channels of the crown closest to the center of the support, known as row **1** crown.

2. The filtration element **(I)** as claimed in claim 1, **characterized in that** the substantial alignment between the axes of the flow and connection paths and the axes of the channels which favors the mechanical strength of the support corresponds to the fact that at least one axis **(Yₙ)** of a flow and connection path (**Pₙ**) of the crown (**Fₙ**) closest to the periphery (**1₁**) of the support **(1),** known as row **n** crown, is substantially aligned with the axis (**Xₙ₋₁**) of an adjacent channel of the crown (**Fₙ₋₁**) of lower row **n-1,** said axis (**Xₙ₋₁**) of the channel itself being substantially aligned with the axis (**Yₙ₋₂**) of an adjacent flow and connection path (**Pₙ₋₂**) of the crown (**Fₙ₋₂**) of lower row **n-2.**

3. The filtration element **(I)** as claimed in claim 2, **characterized in that**, on the one hand, the axis (**Yₙ**) of a flow and connection path (**Pₙ**) of the crown (**Fₙ**) closest to the periphery (**1₁**) of the support **(1),** known as row **n** crown, is aligned with the axis (**Xₙ₋₁**) of an adjacent channel of the crown (**Fₙ₋₁**) of lower row **n-1,** with a tolerance of ±16% and, preferably, of ±10%, and preferentially of ±5%, of the value of the angular sector defined by the two axes of symmetry of the flow and connection paths delimiting said channel of the row **n-1** crown and, on the other hand, said axis (**Xₙ₋₁**) of the channel is itself substantially aligned with the axis (**Yₙ₋₂**) of an adjacent flow and connection path (**Pₙ₋₂**) of the crown (**Fₙ₋₂**) of lower row **n-2,** with a tolerance of ±16% and, preferably, of ±10%, and preferentially of ±5%, of the value of the angular sector defined by the two axes of symmetry of the flow and connection paths delimiting said channel of the row **n-1** crown.

4. The filtration element **(I)** as claimed in claim 2 or 3, **characterized in that** it comprises at least four filtration crowns (**F₁**, **F₂, F₃,** ...**Fₙ**) and **in that** for at least one axis **(Yₙ)** of a flow and connection path (**Pₙ**) of the crown (**Fₙ**) of row **n,** which is substantially aligned with the axis (**Xₙ₋₁**) of an adjacent channel of the crown (**Fₙ₋₁**) of lower row **n-1,** with said axis of the channel itself substantially aligned with the axis (**Yₙ₋₂**) of an adjacent flow and connection path (**Pₙ₋₂**) of the crown (**Fₙ₋₂**) of lower row **n-2,** there is also substantial alignment between said axis (**Yₙ₋₂**) of the flow and connection path (**Pₙ₋₂**) of the crown (**Fₙ₋₂**) of row n-2 and the axis (**Yₙ₋₃**) of the adjacent flow and connection path (**Pₙ₋₃**) of the crown (**Fₙ-₃**) of row **n-3.**

5. The filtration element **(I)** as claimed in claim 1, **characterized in that** the substantial alignment between the axes of the flow and connection paths and the axes of the channels, which favors the mechanical strength of the support, corresponds to the fact that at least one axis (**Xₙ**) of a channel of the crown (**Fₙ**) closest to the periphery (**1₁**) of the support **(1),** known as row **n** crown, is substantially aligned with the axis (**Yₙ₋₁**) of an adjacent flow and connection path (**Pₙ₋₁**) of the crown (**Fₙ₋₁**) of lower row **n-1,** said axis (**Yₙ₋₁**) of the flow and connection path being itself substantially aligned with the axis (**Xₙ₋₂**) of an adjacent channel of the crown (**Fₙ₋₂**) of lower row **n-2.**

6. The filtration element (I) as claimed in claim 5, **characterized in that**, on the one hand, the axis (**Xₙ**) of a channel of the crown (**Fₙ**) closest to the periphery (**1₁**) of the support **(1),** known as row **n** crown, is aligned with the axis (**Yₙ₋₁**) of an adjacent flow and connection path of the crown (**Fₙ₋₁**) of lower row **n-1,** with a tolerance of ±16% and, preferably, of ±10%, and preferentially of ±5%, of the value of the angular sector defined by the two axes of symmetry of the flow and connection paths delimiting said channel of the row **n** crown and, on the other hand, said axis (**Yₙ₋₁**) of the flow and connection path is itself substantially aligned with the axis (**Xₙ₋₂**) of an adjacent channel of the crown (**Fₙ₋₂**) of lower row **n-2,** with a tolerance of ±16% and, preferably, of ±10%, and preferentially of ±5%, of the value of the angular sector defined by the two axes of symmetry of the flow and connection paths delimiting said channel of the row **n-2** crown.

7. The filtration element **(I)** as claimed in one of the preceding claims, **characterized in that** at least one axis **(Yₙ)** of a flow and connection path (**Pₙ**) of the crown (**Fₙ**) closest to the periphery of the support, known as row n crown, is substantially aligned with the axis (**Yₙ₋₁**) of an adjacent flow and connection path (**Pₙ₋₁**) of the crown (**Fₙ₋₁**) of lower row **n-1,** said axis (**Yₙ₋₁**) of the flow and connection path (**Pₙ₋₁**) itself being substantially aligned with the axis (**Yₙ₋₂**) of an adjacent flow and connection path (**Pₙ₋₂**) of the crown (**Fₙ₋₂**) of lower row **n-2.**

8. The filtration element **(I)** as claimed in claim 7, **characterized in that**, on the one hand, the axis (**Yₙ**) of a flow and connection path (**Pₙ**) of the crown (**Fₙ**) closest to the periphery (**1₁**) of the support **(1),** known as row **n** crown, is aligned with the axis (**Yₙ₋₁**) of an adjacent flow and connection path (**Pₙ₋₁**) of the crown (**Fₙ₋₁**) of lower row **n-1,** with a tolerance of ±3° and, preferably, of ±2°, and preferentially of ±1°, and on the other hand, said axis (**Yₙ₋₁**) of the flow and connection path (**Pₙ₋₁**) is itself substantially aligned with the axis (**Yₙ₋₂**) of an adjacent flow and connection path (**Pₙ₋₂**) of the crown (**Fₙ₋₂**) of lower row **n-2,** with a tolerance of ±3° and, preferably, of ±2°, and preferentially of ±1°.

9. The filtration element **(I)** as claimed in one of the preceding claims, **characterized in that** at least one axis (**Xₙ**) of a channel of the crown (**Fₙ**) closest to the periphery of the support, known as row **n** crown, is substantially aligned with the axiss (**Xₙ₋₁**) of an adjacent channel of the crown (**Fₙ₋₁**) of lower row **n-1,** said axis (**Xₙ₋₂**) of the channel itself being substantially aligned with the axis of an adjacent channel (**Xₙ₋₂**) of the crown (**Fₙ₋₂**) of lower row **n-2.**

10. The filtration element **(I)** as claimed in claim 9, **characterized in that**, on the one hand, an axis (**Xₙ**) of a channel of the crown (**Fₙ**) closest to the periphery (**1₁**) of the support, known as row **n** crown, is aligned with the axis of an adjacent channel (**Xₙ₋₁**) of the crown (**Fₙ₋₁**) of lower row **n**-**1**, with a tolerance of ±16% and, preferably, of ±10%, and preferentially of ±5%, of the value of the angular sector defined by the two axes of symmetry of the flow and connection paths delimiting said channel (**Xₙ₋₁**) of the row **n-1** crown, said axis (**Xₙ₋₁**) of the channel of the crown (**Fₙ₋₁**) of lower row **n-1** itself being substantially aligned with the axis (**Xₙ₋₂**) of an adjacent channel of the crown (**Fₙ₋₂**) of lower row **n-2,** with a tolerance of ±16% and, preferably, of ±10%, and preferentially of ±5%, of the value of the angular sector defined by the two axes of symmetry of the flow and connection paths delimiting said channel (**Xₙ₋₁**) of the row **n-1** crown.

11. The filtration element **(I)** as claimed in one of the preceding claims, **characterized in that** the number of channels per crown is increasing from the row **n-2** to **n** crowns.

12. The filtration element (**I**) as claimed in one of the preceding claims, **characterized in that** in each of the row **n-2** to **n** crowns all the channels are identical.

13. The filtration element **(I)** as claimed in one of the preceding claims, **characterized in that** all the ratios between the transverse cross-sectional surface areas of any channels belonging to the filtration crowns are all within the interval 0.75-1.25, preferably within the interval 0.95-1.05.

14. The filtration element (**I**) as claimed in one of the preceding claims, **characterized in that** the widths of the flow dividers are equal within one and the same crown and are equal from one crown to the next.

15. The filtration element (**I**) as claimed in one of the preceding claims, **characterized in that** the width of each flow divider is constant over its entire length.

16. The filtration element (**I**) as claimed in one of the preceding claims, **characterized in that** all the channels of the filtration crowns (**F₁**, **F₂** ...**Fₙ**) are delimited by an outer wall, two side walls and fillets and optionally an inner wall, said fillets each having an arc-shaped profile, the radius of which is preferably greater than or equal to 0.3 mm, and preferably belongs to the range extending from 0.3 to 1.5 mm.

17. The filtration element (**I**) as claimed in one of the preceding claims, **characterized in that** the row **n, n-1** and **n-2** crowns (**Fₙ**, **Fₙ₋₁**, **Fₙ-₂**) each have a number of channels that is a multiple of an integer m and **in that** the number of axes **(Yₙ)** of a flow and connection path (**Pₙ**) of the row n crown (**Fₙ**), which are substantially aligned with the axis (**Xₙ₋₁**) of an adjacent channel of the crown (**Fₙ₋₁**) of lower row **n-1,** with said axis of the channel itself substantially aligned with the axis (**Yₙ₋₂**)of an adjacent flow and connection path (**Pₙ₋₂**) of the crown (**Fₙ₋₂**) of lower row **n-2,** corresponds to this integer **m.**

18. The filtration element **(I)** as claimed in one of the preceding claims, **characterized in that** the channels (**Cₙ₁**, **Cₙ₂**...) of one and the same filtration crown are all identical and are spaced an equal distance apart from one another.

19. The filtration element **(I)** as claimed in one of the preceding claims, **characterized in that** it comprises a central channel (**C₀₁**), preferably of circular shape, and **in that** the filtration crowns are distributed concentrically with respect to the central channel (**C₀₁**).

20. The filtration element **(I)** as claimed in one of the preceding claims, **characterized in that** all the channels (**C₁₁**, **C₁₂**... **C₂₁**, **C₂₂** ... **Cₙ₁**, **Cₙ₂**...) of the filtration crowns (**F₁**, **F₂** ...**Fₙ**) have a trapezoidal or triangular cross section.

21. The filtration element **(I)** as claimed in one of the preceding claims, **characterized in that** the support has a circular or polygonal cross section.

22. The filtration element **(I)** as claimed in one of the preceding claims, **characterized in that** the surface of all the channels (**C₀₁**, **C₁₁**, **C₁₂**... **C₂₁, C₂₂** ...**Cₙ₁**, **Cₙ₂**...) is covered with at least one inorganic filtration layer.

23. The filtration element **(I)** as claimed in one of the preceding claims, **characterized in that** the mean thickness of the porous zone (Z₀) closest to the central axis is less than the mean thickness of the porous zone (Z_{n-**1**}) closest to the periphery of the support and on moving from the central axis **(A)** of the support toward its periphery, the mean thickness of a porous zone is either identical to the next zone, or smaller.

24. A filtration installation or module comprising a filtration element **(I),** as claimed in one of the preceding claims, in a housing.
